# EUROPEAN PATENT APPLICATION

(11) **EP 3 584 907 A2**
(43) Date of publication of application: **25.12.2019**
(21) Application number: 19179227.4
(22) Date of filing: 10.06.2019
(51) Int. Cl.: H02J 50/80, H02J 50/10

(54) **BI-DIRECTIONAL COMMUNICATION IN WIRELESS POWER TRANSMISSION**

(30) Priority: 14.06.2018 US 201862685236 P; 19.06.2018 US 201862687066 P; 19.06.2018 US 201862687184 P; 25.06.2018 US 201862689693 P; 25.06.2018 US 201862689749 P; 26.06.2018 US 201862690238 P; 26.12.2018 US 201862785061 P; 31.12.2018 US 201862786996 P; 23.01.2019 US 201962796024 P; 15.04.2019 US 201916384765
(71) Applicant: Integrated Device Technology, Inc., San Jose CA 95138 (US)
(72) Inventor: BAVISI, Amit D., Los Gatos, CA 95032 (US); AKKINEPALLY, Gopinath, Milpitas, CA 95035 (US); LEE, Aihua, Saratoga, CA 95070 (US); QI, Tao, San Diego, CA 92128 (US); STEPHENS, Christopher, San Jose, CA 95120 (US); MEHAS, Gustavo, Mercer Island, WA 98040 (US); SMITH, Nicholaus Wayne, La Mesa, CA 91942 (US); JEONG, Chan Young, San Jose, CA 95123 (US); KIM, Changjae, San Jose, CA 95124 (US); SHIN, Hojun, Palo Alto, CA 94303 (US)
(74) Representative: Gill, David Alan

(57) **Abstract**

A wireless power transmitter and a receiver device can communicate through a bidirectional communications channel that uses the wireless power signal transmitted from the transmitter to the receiver. Embodiments of the present invention can provide firmware/software updates to wireless power transmitter, vehicle ignition, security lock systems, data back-up and storage systems, charging node statistics and updates, E-commerce applications, contextual awareness applications, interactive user experiences, and applications to wearables and other devices

## Description

### Related Application

The present disclosure claims priority to U.S. Provisional Application 62/796,024, entitled "Authentication for Securely Operating Electronically Wirelessly Powered Locks," filed on January 23, 2019 (70107.625PV01, 5267-PR); U.S. Provisional Application 62/786,996, entitled "TRx Function Applications," filed on December 31, 2018 (70107.637PV01, 5363-PR); U.S. Provisional Application 62/785,061, entitled "Back-Up System with Wireless Charging," filed on December 26, 2018 (70107.631PV01, 5358-PR); U.S. Provisional Application 62/690,238, entitled "Position, Orientation, and Contextual Awareness Using Wireless Power and Bi-Di Communication," filed on June 26, 2018 (70107.602PV01, 5297-PR); U.S. Provisional Application 62/689,749, entitled "E-Commerce Application Using Bi-Di Communication," filed on June 25, 2018 (70107.601PV01, 5296-PR); U.S. Provisional Application 62/689,693, entitled "Node Charging and Statistics and Updates," filed on June 25, 2018 (70107.600PV02, 5295-PR); U.S. Provisional Application 62/687,184, entitled "Node Charging and Statistics and Updates," filed on June 19, 2018 (70107.600PV01, 5295-PR); U.S. Provisional Application 62/687,066, entitled "Automotive Car Start Digital Key," filed on June 19, 2018 (70107.599PV01 5357-PR); and U.S. Provisional Application 62/685,236, entitled "Charging Network Update Using Bi-Directional Communication," filed on June 14, 2018 (70107.598PV01, 5293-PR), each of which is herein incorporated by reference in its entirety.

### Technical Field

Embodiments of the present invention are related to wireless power systems and, specifically, to utilizing bi-directional communications in the wireless power transmission system.

### Discussion of Related Art

Wireless power charging systems are becoming increasingly common throughout the world. It is increasingly common for mobile devices to be equipped with wireless power receivers. In some cases, wireless devices are increasingly equipped with wireless power transmission capabilities as well as wireless power receiver capabilities.

There are multiple different standards currently in use for the wireless transfer of power. The more common standard for wireless transmission of power is the Wireless Power Consortium standard, the Qi Standard. Under the Wireless Power Consortium, the Qi specification, a resonant inductive coupling system is utilized to charge a single device at the resonance frequency of the receiver coil circuit. In the Qi standard, the receiving device coil is placed in close proximity with the transmission coil. In other standards, the receiving device coil is placed near the transmitting coil, potentially along with other receiving coils that belong to other charging devices.

Typically, a wireless power system includes a transmitter that includes a transmitter coil that is driven to produce a time-varying magnetic field. A receiver includes a receiver coil that receives power transmitted in the time-varying magnetic field and provide that power to a device in which it is included. As discussed above, the receiver can be incorporated within a device such as a cell phone, PDA, computer, or other device. The receiver is positioned relative to the transmitter coil to receive the power transmitted in the time-varying magnetic field.

Stationary wireless power stations are being deployed variety of public places. For example, wireless power stations are being deployed in many restaurants, hotels, airports, lounges, and other public locations, where they may be built into various furnishings. Standards committees such as the Wireless Power Consortium are consistently working to improve the safety and efficiency of wireless power transmission between a wireless power transmitter and a wireless power receiver. Wireless power transmitters are also deployed in automotive or other applications, where they are built into the vehicle. Furthermore, portable devices may also have wireless power transmit capabilities to charge other devices.

Therefore, there is a need to develop systems that can easily utilize these wireless systems in various ways.

### Summary

In accordance with some embodiments, a transmitter can communicate with a receiver can communicate information unrelated to wireless power transmission. A wireless power transmitter includes an inverter coupled to a transmit coil; a wireless controller coupled to operate the inverter to generate a wireless power signal at the transmit coil; a controller coupled to the wireless controller; a bi-directional communications channel that includes a modulator and a demodulator coupled to the controller, the bi-directional communications channel providing modulation and demodulation of data transmission signals on the wireless power signal, wherein the controller exchanges functional data with a receive device placed proximate the wireless transmitter with the bi-directional communications channel to perform a function other than wireless power transmission. A method of operating a wireless transmitter includes providing a wireless power signal; and exchanging functional data transmitted over a bi-directional communication channel on the wireless power signal with a receive device to perform a function other than wireless power transfer.

A wireless power receiver device includes a rectifier coupled to receive power from a wireless power signal at a receive coil; a wireless controller coupled to operate the rectifier to generate power from the a wireless power signal; a device controller coupled to the wireless controller; a bi-directional communications channel that includes a modulator and a demodulator coupled to the device controller, the bi-directional communications channel providing modulation and demodulation of data transmission signals on the wireless power signal, wherein the controller exchanges functional data with a transmitter proximate the wireless power receiver with the bi-directional communications channel to perform a function other than wireless power transmission. A method of operating a wireless power receiver device includes receiving a wireless power signal from a transmitter; exchanging functional data transmitted over a bi-directional communication channel on the wireless power signal with the transmitter that provides the wireless power signal to perform a function other than wireless power transfer.

A wireless power transmitter and a receiver device can communicate through a bi-directional communications channel that uses the wireless power signal transmitted from the transmitter. Embodiments of the present invention can provide firmware/software updates to wireless power transmitter, vehicle ignition, security lock systems, data back-up and storage systems, charging node statistics and updates, E-commerce applications, contextual awareness applications, and applications to wearables and other devices

These and other embodiments are further discussed below with respect to the following figures.

### Brief Description of the Drawings

Figure 1 illustrates a wireless power system according to some embodiments.
Figure 2 illustrates a wireless power transmitter in communication with a receiving device.
Figures 3A and 3B illustrate a system for updating firmware/software on a wireless power transmitter according to some embodiments.
Figures 4A and 4B illustrate some conventional automotive ignition systems.
Figures 5A, 5B, and 5C illustrate a vehicle ignition system according to some embodiments.
Figures 6A, 6B, and 6C illustrate a security lock system according to some embodiments.
Figures 7A, 7B, and 7C illustrate a wireless power charger with a data back-up according to some embodiments.
Figures 8A and 8B illustrate a wireless power system for monitoring statistics regarding the charging transmitter node.
Figures 9A, 9B, and 9C illustrates a wireless power system involved in electronic commerce.
Figures 10A and 10B illustrate a wireless power system located at a particular location interacting with a receiver device.
Figures 11A and 11B illustrates wearables and other devices interacting with a wireless charger according to some embodiments.

### Detailed Description

In the following description, specific details are set forth describing some embodiments of the present invention. It will be apparent, however, to one skilled in the art that some embodiments may be practiced without some or all of these specific details. The specific embodiments disclosed herein are meant to be illustrative but not limiting. One skilled in the art may realize other elements that, although not specifically described here, are within the scope and the spirit of this disclosure.

This description and the accompanying drawings that illustrate inventive aspects and embodiments should not be taken as limiting--the claims define the protected invention. Various changes may be made without departing from the spirit and scope of this description and the claims. In some instances, well-known structures and techniques have not been shown or described in detail in order not to obscure the invention.

Elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

Embodiments according to the present invention use a bi-directional back-channel transmission channel between a wireless power transmitter and a wireless power receiver proximate to the wireless power transmitter to exchange data not related to the wireless power transmission itself. The back-channel transmission channel can be used instead of wired communication links or other wireless links such as Bluetooth. Using the existing back-channel communications channel can greatly reduce the component cost of transmitters and/or receivers involved in the process while allowing for robust functionality between a wireless power transmitter and a wireless power receiver.

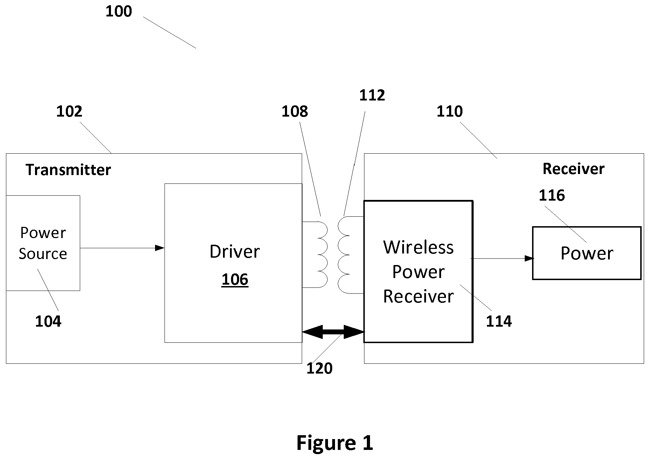

Figure 1 illustrates a wireless power system 100 according to some embodiments. As illustrated in Figure 1, system 100 includes a transmitting device 102. A receiving device 110 is placed proximate the transmitting device 102 such that power can be transferred from the transmitting device 102 to the receiving device 110. As discussed above, transmitter 102 may be permanently installed in various locations such as restaurants, rest areas, airports, office complexes, homes or other locations as needed to provide charging services. In some embodiments, transmitter 102 may be movable to various locations within structures or within locations.

Throughout this disclosure, transmitter 102 is identified as the device that is transmitting wireless power while receive device 110 is identified as the device that is receiving wireless power. In some embodiments, a particular device may have the capability of both receiving and transmitting power and the identification used is dependent on the function of the device during the operation discussed. Transmitter 102 may be part of a stationary transmission system or it may be a mobile device with wireless power transmission capability such as a tablet or smart phone. Receiving device 104 may also be part of a stationary device, may be a wearable device, or may be a smart phone, tablet, or other mobile device.

As is further illustrated in Figure 1, transmitter 102 includes a power source 104. Power source 104 can be any source of power, for example a standard house outlet (120V AC, 240AC or similar according to the local power source standards) and circuitry to provide voltages (DC or AC) as needed to operate other circuits of transmitter 102. In some cases, power source 104 can be a battery source, but it is more common to provide an AC source where transmitter 102 is permanently installed at a location.

As illustrated in Figure 1, power source 104 provides power to driver 106. Driver 106 receives a voltage and drives a transmit coil 108 to provide a time varying magnetic field. Driver 106 can include controllers, which include processors, as well as voltage inverters controlled by the controllers to efficiently provide the time varying magnetic field at transmit coil 108.

Receive device 110 includes a receive coil 112 that receives the time varying magnetic field generated by transmit coil 108. As such, receive device 110 is placed proximate to transmit device 102 so that transmit coil 108 and receive coil 112 are substantially aligned. As illustrated in Figure 1, receive device 110 includes a wireless power receiver 114 that receives signals from receive coil 112 and provides power to a power block 116. As such, wireless power receiver 114 includes rectification, filtering, and other power processing circuitry to provide power to power block 116. Power block 116 can provide voltages to other circuits of receive device 110. Power block 116 may, for example, include a battery charger and battery to be charged.

As is further illustrated in Figure 1, a communication channel 120 is provided between receive device 110 and transmit device 102. Communication channel 120 modulates data signals onto the time varying magnetic field generated by transmitter coil 108 and received by receiver coil 112 (typically using amplitude-shift keying coding (ASK) or frequency shift keying (FSK) to transfer the data). In many systems, bi-directional back-channel communications can be provided by communications channel 120. In particular, transmitter device 102 can transmit data to receive device 110 by frequency shift key (FSK) modulation. In some embodiments, FSK modulation can be performed around a center frequency f_{c} for wireless power transfer (usually between 110 and 205 kHz. In particular, the phase shift may be +/-500Hz for 256 or 512 cycles of f_{c} (or at lower count intervals to increase communications rates over time). In some cases, a phase shift modulation can be used by transmitter device 102 to transmit data at higher data rates as described in U.S. Patent Application Serial No. 16/282,023, entitled "Wireless Power Back Channel Communication," by Detelin Borislavov Martchovsky, assigned to the same entity as is the current disclosure, which is herein incorporated by reference in its entirety.

Receive device 110 can receive the transmitted data modulated by transmitter device 102 on the wireless power signal generated at transmit coil 108. Further, receive device 110 can modulate data on the wireless power signal that can be detected by transmit device 102. In particular, receive device 110 can modulate a load coupled to the received wireless power signal in wireless power receiver 114, which generates an amplitude shift keyed (ASK) modulated signal at transmit device 102. In many embodiments, receive device 110 can transmit data to transmitter 102 at a rate of around 2kBits/s.

In some embodiments, communications channel 120 may further include other wireless communications. For example, in some embodiments Bluetooth, near-field communications (NFC), or other wireless data transmission can be used to transmit data between receiving device 110 and transmitter 102.

Consequently, receive device 110 can provide operational information and power requests to transmit device 102 to provide wireless power at an appropriate level. The WPC standard itself provides communications protocols for the exchange of data related to the wireless power transfer. In some cases, a device authentication procedure can be implemented similar to that described in U.S. Application Serial No. 15/604,466, entitled "Establshing Trusted Relationships for Multimodal Wireless Power Transfer," by Manjit Singh, Jianbin Hao, Zhuyan Shao, and Christopher Stephens and assigned to the same applicant as is the present disclosure, which is herein incorporated by reference in its entirety.

In accordance with embodiments of the present invention, communications channel 120 is used to transmit data not directly related to the transmission of wireless power between transmit device 102 and receive device 110. As such, transmitter device can be configured to provide additional services, some examples of which are described below. Further, receive device 110 can be configured to provide additional data and services to transmit device 102. Examples of embodiments of the present invention can provide firmware/software updates to wireless power transmitter 102, vehicle ignition, security lock systems, data back-up and storage systems, charging node statistics and updates, E-commerce applications, contextual awareness applications, and applications to wearables and other devices.

Some embodiments, for example, provide the capability of updating the firmware or software (firmware/software) in wireless power transmitter 102. This update can be accomplished by receiver device 110 transferring the firmware/software update through bi-directional communications channel to transmit device 102 during wireless power charging. Transmitter 102 can then update its internal firmware/software with the updated firmware/software.

In some embodiments, receiving device 110 may be a wearable device. For example, transmitter 102 can be included in a cell-phone or smart-phone and used to charge a wearable device such as a watch, a wrist band, medical monitor, or other devices. Benefits are that the cell-phone transmit device 102 serves as a portable charging station, allowing users to reduce the number of devices they need to carry. Cell-phone transmitter 102 may also be collect data from the wearable devices of receive device 110. Transmitter 102 may store that data or may, in turn, couple to an internet provider to upload the data. Data may be sent back and forth between transmit device 102 and receiving device 110 to provide updates or any other needed information.

In accordance with some embodiments transmitter 102 can be incorporated in a vehicle ignition system. Authenticating receiver device 110 placed proximate to transmitter 102 such that wireless power transmission occurs can allow a user to start and operate the vehicle.

According to some embodiments, an electronic lock system where receiver device 110 is incorporated into an electronic lock allows transmitter 102 placed proximate to receiver device 110 to unlock the lock. Transmitter 102 may be incorporated in a mobile device (e.g. smartphone, tablet, dedicated fob, or other mobile device) that provides wireless power and authentication to receiver 110 to operate the lock. Transmitter 102 can include a biometric reader that can be used to authenticate a user based on biometric data.

In some embodiments, transmitter 102 may provide back-up data storage for receiver 110. Transmitter 102 and receiver 110 can be configured so that data can be transferred during wireless power transmission. Consequently, data from the receiver device 110 can be backed up in transmitter 102 while receiver device 110 is being charged. Further, in some embodiments, receiver device 110 can receive firmware/software updates during the wireless power transmission.

In some embodiments, maintenance of a wireless power transmitter 102 can be performed with a receive device 110. Authentication and communication of operating statistics, operating logs, and testing information can be performed between receive device 110 and transmitter 102.

In some embodiments, membership services can be provided through a bidirectional communications channel 120 between wireless charger transmitter 102 and a receive device 110. Membership services can be provided to receive device 110 after authentication has been performed.

In some embodiments, location dependent services can be provided. The location of transmitter 102 may be precisely known. Such location data can include position, orientation information, and contextual information. Such information can be used to provide services such as advertisements or emergency services based on the location information to a user of the receiving device.

According to some embodiments wireless power transmitter 102 provides power to a receiving device 110, which does not include a battery. Receiving device 110 may, for example, be a wearable device, a non-powered device, a waterproof or dust proof device, a safety device, or other device that may or may not operate only when being wirelessly powered.

In some embodiments, receiving device 110 may be a battery-less or On-the-Go (OTG) device. Examples of a battery-less or OTG device use includes a speaker, flexible screen, wireless key-board, telecom set (speaker and microphone) or other device wirelessly powered through a transmitting device 102, which can be part of a mobile device such as a cell phone or a tablet. In these applications, the wireless power transmission produced by transmitting device 102 can be used to replace the traditionally battery-power or OTG USB power source for these devices, without using a cable. Simply place the battery-less receive device 110 close to cell phone transmitter 102 to provide power and communications. Without a battery OTG receive device 110 can have a smaller size, have less weight, and provide a more flexible shape. Comparing with the traditional OTG methods, no cable is needed. For speakers or other devices, data can be transmitted between transmitting device 102 and receiving device 104 through a communications channel 120 as discussed above.

In some embodiments, receiving device 104 may be a water or dust-proof device. An example includes using a cell-phone or a portable charging device to charge an underwater camera and receive photo data from the underwater camera. Benefits of wireless charging can make the underwater devices really water-proof. Also, the TRX function of transmitting device 102 can make the receive device 110 (cell-phone or the portable charging devices) water-proof to fit the underwater application requirements.

In some embodiments, receiving device 110 may be an outdoor device. Examples include using transmitter 102, which is included in a cell-phone or a portable charging device, to charge receiving device 110, which can be an outdoor monitor, an outdoor coffee maker, light, or other outdoor portable device. Benefits include providing portable and water-proof devices for outdoor use.

In some embodiments, receiving device 110 can be a safety device. For example, transmitter 102 may be a cell-phone with a TRx function that can be used to open/close an electric lock or a safety box. In some embodiments, receiver device 110 may not include a battery and may be completely powered by transmitter 102 so that there is no need to install (or replace) a battery for such electric safety device. As a consequence, these devices can be made to be more robust (non-moveable). In such devices, wireless power can be used to power the safety device while communications channel 120 can be used to communicate an access code that opens the lock and allows access to the safety device.

In some embodiments, phone-phone or phone-watch communication can be provided. In other words, if transmitter 102 is part of a mobile phone and receiver 110 is part of a mobile phone or a wearable watch. During the transmission function there is not only power flow but also communication between transmitter device 102 and receive device 110, which can be used in some near-field-communication applications such as E-payment. Benefits include reduction of the NFC components in the phone and wearable devices involved. In some embodiments, communication can happen when the phone/watch has a discharged battery.

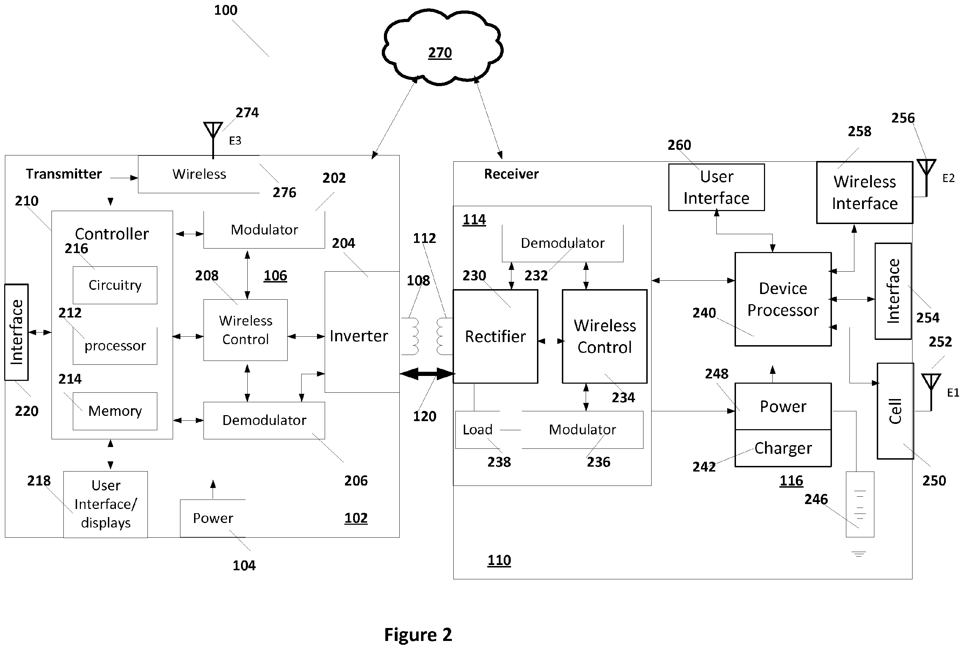

Figure 2 illustrates an example of a system 100 that includes a wireless transmitter 102 and a receiver device 110 according to some embodiments. Wireless transmitter 102 and receiver device 110 illustrated in Figure 2 are provided as examples. As is further described below, the particular configurations of wireless transmitter 102 and receiver device 110 illustrated in Figure 2 may be modified for particular applications. In particular, wireless power transmitter 102 for particular applications may not include all of the components illustrated in Figure 2 and may include additional components not illustrated in Figure 2. Similarly, receive device 110 may not include all of the components illustrated in Figure 2 and may include additional components not illustrated in Figure 2. The configuration illustrated in Figure 2 should not be considered limiting.

As illustrated in Figure 2, wireless power driver 106 can include an inverter 204, wireless control circuit 208, modulator 202, and demodulator 206. Inverter 204 is coupled to drive alternating current through transmit coil 108 and may include an array of switches that form a half-bridge or full-bridge arrangement that provide an AC current through transmit coil 108. Wireless controller 208 is coupled to control the switches of inverter 204 to efficiently transmit power through transmit coil 108 by operating the switches to provide the AC current at determined frequencies and amplitudes. Wireless control circuit 208 is also coupled to modulator 202 and demodulator 206. As discussed above, modulator 202 can in some embodiments provide FSK modulation by further controlling the switches in inverter 204 at frequencies that are frequency shifted from a central frequency. Furthermore, demodulator 206 can monitor the power provided to transmit coil 108 to detect the ASK modulation provided by receive device 110.

As is further illustrated, wireless control circuit 208, modulator 202, and demodulator 206 can be coupled to a controller 210. Controller 210 provides data to modulator 202, receives data from demodulator 206, and provides control instructions to wireless control circuit 208 to appropriately control inverter 204 to provide wireless power. Controller 210 also may perform additional tasks other than the primary task of providing wireless power. In some embodiments, controller 210 can be coupled to a user interface/display 218 and/or to an external interface 220.

Controller 210 may include a processor 212, memory 214, and support circuitry 216. Processor 212 can be any microprocessor capable of executing the algorithms discussed herein. Memory 214 can be any form and combination of volatile and non-volatile memory that stores data and instructions. Controller 210 may also be a finite state machine that is a combination of digital circuit design to have a pre-defined set of operations fixed by electronics. Processor 212 executes instructions stored in memory 214. Controller 210 further includes circuitry 216 that supports processor 212 in communications with modulator 202, wireless controller 208, and demodulator 206.

In embodiments that include user interface 218, user interface/displays 218 can be any form of display. Examples include user input device, display screens, touchscreens, or any other device for displaying data or inputting data. In embodiments that include interface 220, interface 220 can be any form of interface, hard wired or wireless. Interface 220 can provide connection with other devices, including a local area network.

In some embodiments, transmitter 102 can further include a wireless interface 276 coupled through an antenna 274 to the internet through cloud 270. As such, transmitter 102 can be part of a stationary device or may be part of a mobile device such as a smart phone, tablet, or other device.

Figure 2 further illustrates an example of receive device 110. Receive devices applicable to various embodiments described below may not have all of the components particularly illustrated in Figure 2. As discussed above, receive device 110 can be any device that includes wireless power receiver 114 and a power block 116 that provides power to components of receive device 110. However, in some embodiments, receiver device 110 can be coupled to internet services in cloud 270, either directly through wireless connections or through a cell phone network. Further, receive device 110 can be a simplified dedicated device with almost no internal functionality to a tablet or smart phone with extensive computing and interface capabilities.

In the example illustrated in Figure 2, receiver 110 includes a device processor 240 that is coupled to cell phone service 250, hard-wired interfaces 254, wireless interfaces 258, and a user interface 260. Interface 254 can be, for example, a USB, HDMI, or other common port to interface that allows wired connections to local area networks or external devices. Wireless interfaces 258 can be any wireless interface coupled to an antenna 256 that wirelessly interfaces to the internet or to other devices. For example, wireless interfaces 258 can include WiFi interface (802.11 or other standard), Bluetooth interface, or other wireless interfaces to connect with a wireless internet connection or other devices. Wireless interface 258 may further be coupled to wireless power receiver to implement near field communications (NFC). As such, through interaction with a local area network, internet services in cloud 270 can be accessed through wireless interface 258. Cell phone service 250 can also provide access to internet service in cloud 270. Cell phone service 250 can include interfaces coupled to an antenna 252 for coupling with nearby cell phone service towers to transmit voice and data over the cell network. As such, cell service 250 can provide interfaces to internet in cloud services 270.

User interface 260 can include any set of user interfaces. For example, user interface 260 can include a display, a touch-screen, hard-button input devices, biometric readers, cameras, or other devices. In some cases, device processor 240 can use input data such as login information, biometric information, facial recognition, etc. to provide user authentication as part of any authentication process discussed below.

Device processor 240 can be any processing system capable of performing the functions to operate receiver device 110. Device processor 240 may include a microcomputer or microprocessor capable of executing instructions for performing the functions of receiver device 110. Device processor 240 further includes volatile and non-volatile memory to hold instructions executable by the microprocessor or microcomputer and other support circuitry for communicating with other components of receiver device 110.

As is further illustrated in Figure 2, device processor 240 can be coupled to wireless power receiver 114. Wireless power receiver 114 includes a rectifier circuit 230 that is coupled to receive the wireless power signal from receive coil 112. Rectifier circuit 230 can include a full-bridge or half-bridge arrangement of switches that are controlled by wireless controller 234. Wireless controller 234 controls the switches of rectifier circuit 230 to receive wireless power and provide a rectified voltage. In some embodiments, wireless controller 234 may further include power circuits for providing voltages outside of wireless power receiver 114, for example voltages that are supplied to power block 116.

Wireless controller 234 can itself include processors (microprocessors or microcomputers) sufficient to operate the functions of wireless power receiver 114 and volatile and non-volatile memory providing instructions and data to the processors. Wireless controller 234 controls the switches of rectifier 230 to receive the wireless power from receive coil 230. Wireless controller 234 also provides communications with device processor 240.

Further, wireless power receiver 114 includes a demodulator 232 coupled to rectifier circuit 230 and wireless controller 234. Demodulator 232 detects the FSK modulation provided by transmitter and provides the received digital data to wireless controller 234. In some cases, wireless controller is itself directed by device processor 240, in which case data received is directed to device processor 240. In some embodiments, wireless controller 234 executes instructions for transfer of wireless power and therefore data related to wireless power remains with wireless controller 234 while data that is not directed for wireless controller 234 (e.g., data not directly related to transmission of wireless power) is then provided to device processor 240.

Additionally, wireless power receiver 114 includes a modulator 236 that receives data from wireless controller 234. Data for transmission can be provided directly by wireless controller 234 or may be received by wireless controller 234 from device processor 240. Modulator 236 can provide ASK modulation related to the data for transmission by modulating a load 238 coupled to rectifier 230. In some embodiments, load 238 may be capacitors coupled to the input leads from receive coil 112 that can be engaged or disengaged by modulator 236 to provide the load modulation. As discussed above, the load modulation can be received by demodulator 206 of transmitter device 102 as an ASK modulation.

As discussed above, wireless power receiver 114 provides voltages to power block 116. Power block 116 can include a power section 248 that provides operating voltages for receiver device 110. Power section 248 can be coupled to an internal battery 246 that can provide a source of power in the absence of wireless power at receive coil 112. Further, power block 116 can include a battery charger 242 that charges internal battery 246 when wireless power is present.

As discussed above and in the examples below, transmitter 102 and receive device 110 can include the components illustrated in Figure 2 or may include a subset of those comments and may include additional components to perform the desired function. Additionally, transmitter 102 and receive device 110 can, in accordance with a particular application, be stationary devices permanently installed within structures or may be parts of mobile devices. Several embodiments discussing several applications is specifically discussed below. However, multiple other applications can be provided by one of ordinary skill in the art.

### Firmware/Software Updates

Wireless power transmitters such as transmitter device 102 can be placed in many consumer accessible places, for example restaurants, airport lounges, transportation services (trains, busses, and cars) or other areas. Transmitter device 102 can be built into furniture or other platforms that are easily accessible to the consumer. However, in many instances (for example restaurants, hotels and Airport lounges) wireless charging transmitter device 102 is installed by some third part company. Further, the owners of the facilities do not have the technical expertise and do not want to spend too much money in maintaining these transmitters. Additionally, the Wireless Power Consortium (standards committee) continues to improve the Qi standard to improve safety and user experience. Other standards are also constantly improving. In these cases, the firmware/software stored in memory 214 of controller 210 of transmitter device 102 should be reprogrammed periodically to incorporate the new standards specifications. Furthermore, the consumer standard transmitters 102 typically do not have a direct mechanism to update the firmware/software on transmitter 102 (or pad) to get service to the latest standard software.

Transmitter device 102 can be built into furniture or other platforms where it can be hidden from view and provide a useful platform for charging consumer devices such as receiver device 110. As such, receiver device 110 is typically any battery powered device such as a smart phone, tablet, small computer, or other device as illustrated in Figure 2. In accordance with some embodiments, receiver device 110 communicates with the internet or other remote network 270, either through direct wireless internet connection or through a cell phone connection as discussed above with respect to Figure 2. However, in some embodiments, receive device 110 can be a dedicated device that stores the software updates internally and provides the updates to transmitter device 102 when placed proximate to transmitter device 102.

Using traditional methods for reprogramming the firmware/software in transmitter pads such as transmitter device 102 that is embedded in furniture requires the physical disassemble and re- assemble of the furniture. It is a very painstaking process to update the firmware/software using traditional methods, for example by downloading new software through interface 220. Further, many facilities with wireless charging transmitter devices 102 do not have a down time in which facilities are empty as they may be open 24Hrs. Technicians working on the wireless charging infrastructure, therefore, will create inconvenience to customers of the facilities and also may cause a loss of revenue to facilities owner.

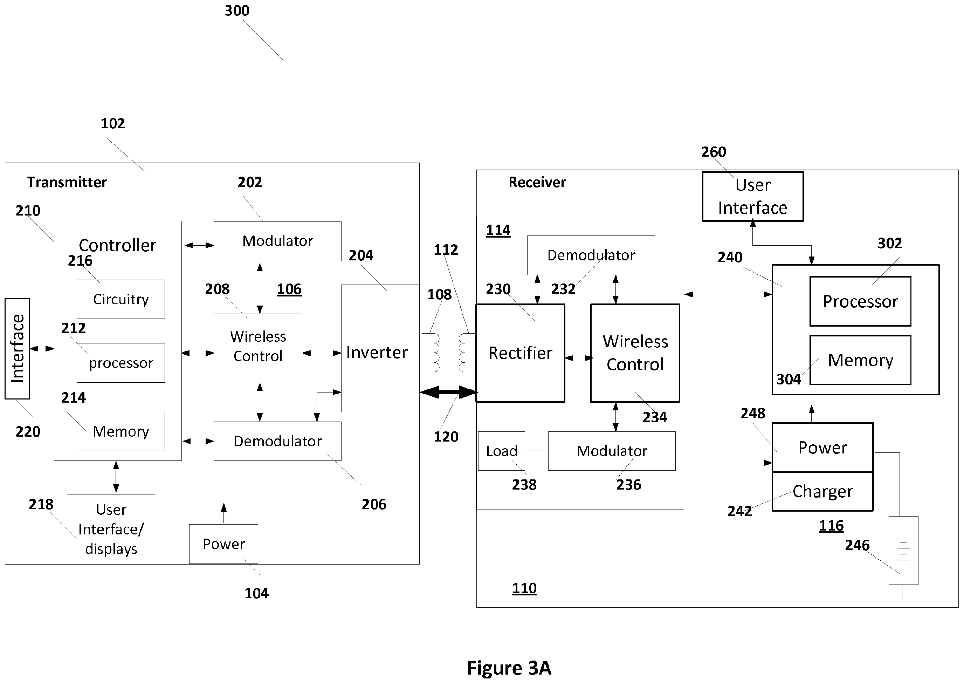

Figure 3A illustrates an example of a system 300 that can be used to upgrade the software stored in memory 214 of controller 210. Receive device 110 is capable of providing software updates through communications channel 120. As such, receive device 110 includes device processor 240, which includes a processor 302 and memory 304. In some embodiments, device processor 240 stores the software update in memory 304. In some embodiments, the software update is retrieved from an internet site in cloud 270, as is shown in Figure 2. Memory updates may be applied to receive device 110 by transmit device 102, may be applied to transmit device 102 by receive device 110, or may be applied to another device coupled to either transmit device 102 or receive device 110.

As such, Figure 3A illustrates as an exemplary case receiver device 110 configured to internally store software updates. Memory 304 includes volatile and non-volatile memory sufficient to store instructions for processor 302 and the software update for transmitter 102. In some embodiments, a user interface 260 allows a user to initiate the update and receive updates with regard to whether the software update has been completed. As suggested above, in some embodiments device processor 240 is coupled to receive the software update from the internet.

As is further illustrated in Figure 3A, device processor 240 is coupled with wireless power receiver 114 to receive power and to communicate with transmitter 102 through communications channel 120. Consequently, firmware/software upgrades for transmitter 102 can be transmitted from memory 304 or an internet source in cloud 270 to receive device 110 and transmitted to transmitter 102 through the bi-direction communications channel 120 offered on the wireless power link between transmitter 102 and receive device 110. Consequently, using Bi-directional communications the receiver (Rx) can transmit the update data to transmitter (Tx).

Usually receive device 110 is a mobile phone, which has a high processing power and good connectivity with the internet in cloud 270, as illustrated in Figure 2. Receive device 110 can talk to the cloud server through network 270 and download the latest firmware for transmitter 102 that supports the up-to-date standard. Using Bi-directional communications of communications channel 120 receive device 110 can transfer the Firmware/software updates to transmitter 102 wirelessly. Transmitter 102 can then receive the updates and reprogram the firmware/software accordingly.

Consequently, using this method there is no need to disassemble and re- assemble the furniture in which transmitter 102 is embedded. Furthermore, software updates can occur any time receive device 110 is proximate to transmitter 102 and can be accomplished while receive device 110 is being charged. In some embodiments, receive device 110 can be a particular authorized device or may include user authenticating software in order to verify to transmitter 102 that receive device 110 can provide update information. Receive device 110 can be a dedicated device that is operated by a technician that updates the software on transmitter 102 or may be a user authorized to update the software.

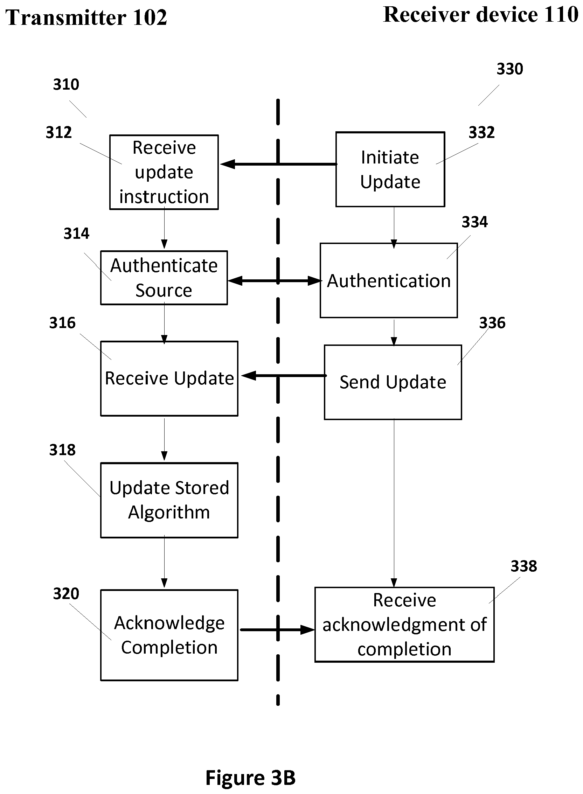

Figure 3B illustrates an algorithm 310 that can be executed by controller 210 of transmitter 102 to receive a firmware/software update and an algorithm 330 that can be executed by device processor 240 of receiver device 110 to transmit the firmware/software update according to some embodiments. Algorithms 310 and 330 can be executed after initiation of wireless power transfer between transmitter 102 and receiver device 110.

Algorithm 330, in step 332, initiates firmware/software update. Figure 3B begins in step 312 when a request to update the firmware/software is received from receive device 110. Initiation may happen at the request of a user through user interface 260. Receive device 110 launch step 332 with a user input from user interface 260. In some embodiments, receive device in step 332 may receive the current firmware/software version from transmitter 102 and automatically initiate a firmware/software update if transmitter 102 is not executing a recent version. In step 312 of algorithm 310 is executed by controller 210 of transmitter 102 when it receives an update instruction from step 332 in receiver device 110. The update instruction can be in the form of an update request transmitted through the bi-directional back-channel communications channel 120 as described above.

Algorithm 310 may then proceed to step 314, although this step may be optional and not included in some embodiments. Step 314 may be operated if an authentication procedure has not already been performed between transmitter 102 and receive device 110. Algorithm 330 also transitions to step 334. In steps 314 and 334, transmitter 102 and receiver device 110 communicate to authenticate the transaction. The authentication algorithm executed between step 314 of algorithm 310 executing in transmitter 102 and step 334 of algorithm 330 executing in receiver device 110 can take any of a number of forms, including user login procedures or internal verification procedures (e.g. receiver device 110 has stored a key code that is recognized by transmitter 102). Once authentication is complete, algorithm 310 proceeds to step 316 and algorithm 330 proceed to step 336.

In step 336 of algorithm 330, receive device 110 transmits the firmware/software update to transmitter 102, where it is received in steps 316 and 318. As discussed above, in some embodiments the firmware/software update is downloaded from the internet. In some embodiments, the firmware/software update is prestored in memory 304 of receiver 110. The firmware/software is received and the algorithms stored in memory 214 of controller 210 is updated in steps 316 and 318. In some embodiments, steps 316 and 318 are separate in that first algorithm 310 receives the update and then executes to update the current firmware/software in controller 210. In some embodiments, processor 212 receives the new updated algorithms and updates them in memory 214 simultaneously. Once the firmware/software is received and updated in steps 316 and 318, algorithm 310 proceeds to step 320. In step 320, if controller 210 determines that the updated firmware/software is successfully received, controller 210 sends through channel 120 an acknowledgment to step 338 in receive device 110. In some embodiments, controller 210 may reboot after step 320 to execute the updated software. In step 338 of algorithm 330, receive device 110 awaits acknowledgment of a successful firmware/software update. If the acknowledgment is not received, for example within a preset time, algorithm 330 may start over at step 332 or may exit.

Consequently, receive device 110 can execute algorithm 330 and receive device 102 can execute algorithm 310 that together facilitate the transfer of upgrade firmware/software to transmitter 102. In some embodiments, receive device 110 and transmitter 102 can execute an authentication security procedure to validate transmitter 102 and receiver 110 before communications of the new firmware/software can begin. In some embodiments, receive device 110 can be operated by a service technician, but the process can further be operated with any receiver device 110 that can update the firmware/software of transmitter 102.

### Vehicle Ignition

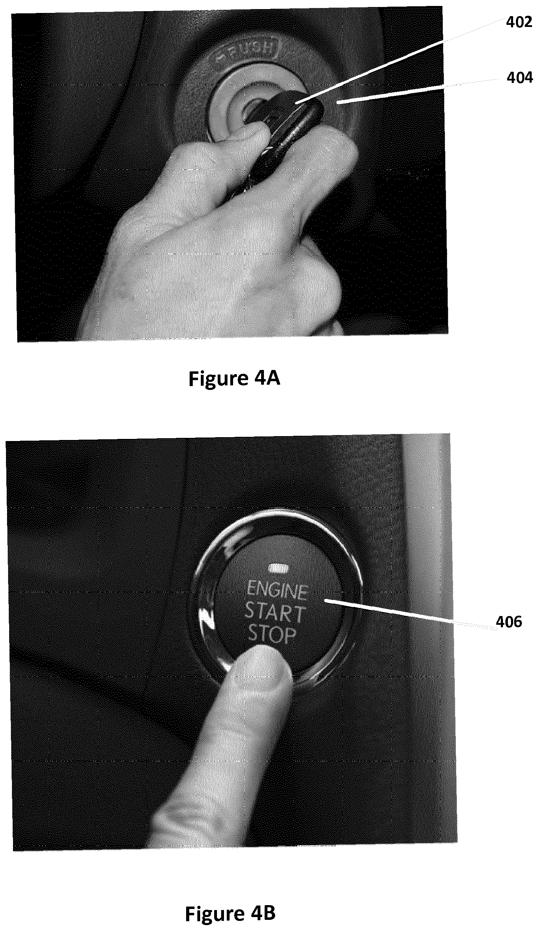

Typical vehicle systems, including automotive systems (cars, trucks, heavy equipment, and other mobile systems) or other vehicle systems (boats, planes, or other conveyances), are started using a key 404 in an ignition 402 as in Figure 4A or by pushing a start button 406 as illustrated in Figure 4B. The starting procedure as illustrated in Figure 4A is to press a brake pedal and insert and twist the key 404 to start the vehicle. The starting procedure as illustrated in Figure 4B is to press the brake pedal and push the button 406 to start the vehicle. In either case, the operator needs the key 402 or a key fob to start the automotive systems. In situations where the operator does not have the key or the key fob, the operator is unable to operate the vehicle.

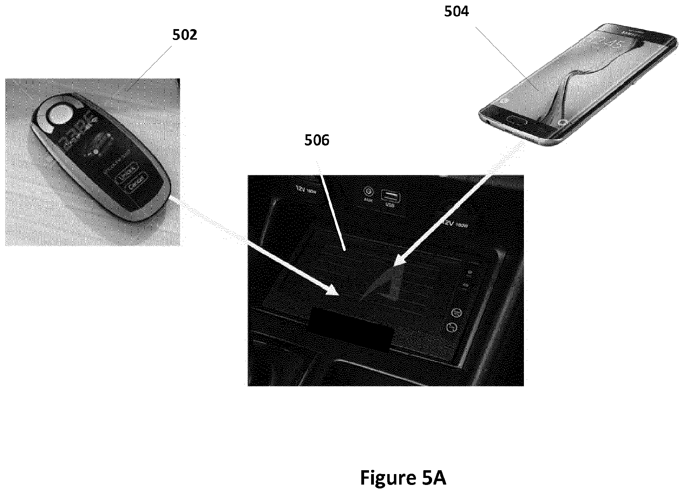

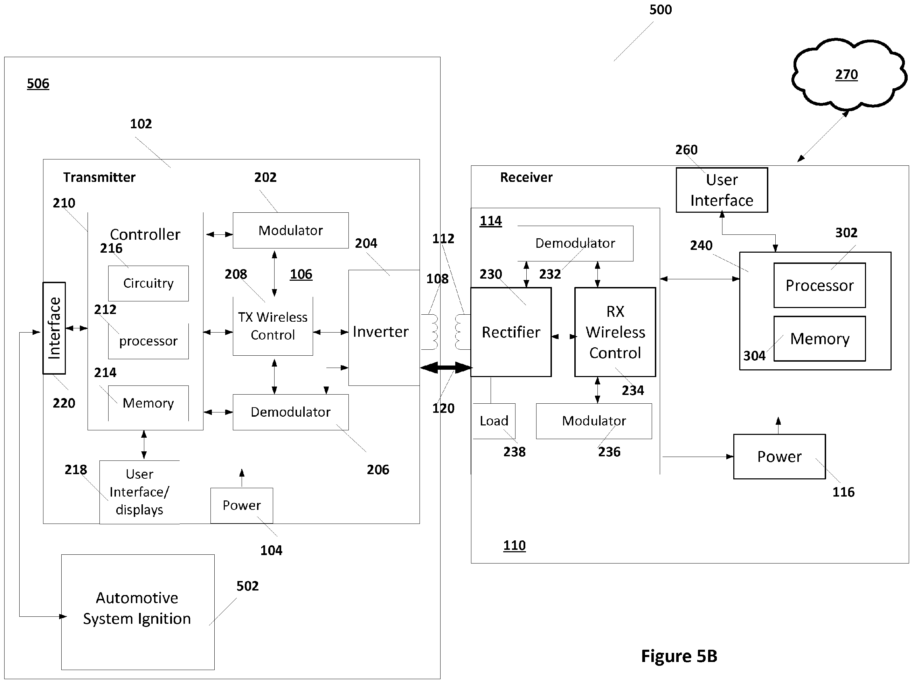

Figure 5A illustrates an automotive starting system 500 according to some embodiments of the present invention. As illustrated in Figure 2, a digital key 502 or smart phone 504 is placed on automotive ignition system/charger 506 that is embedded in the automotive system. When digital key 502 or smart phone 504 is placed on automotive ignition system/charger 506, the automotive system is enabled to start. In this case, the automotive system may start when the brake is pressed, when a separate button is pressed, or when the digital key 502 or smart phone 504 is instructed to start the automobile. As shown in Figure 5B, digital key 502 and smart phone 504 can be receiver device 110 as is illustrated in Figure 2C while automotive system charger 506 can include a transmitter device 102 as is illustrated in Figure 2C.

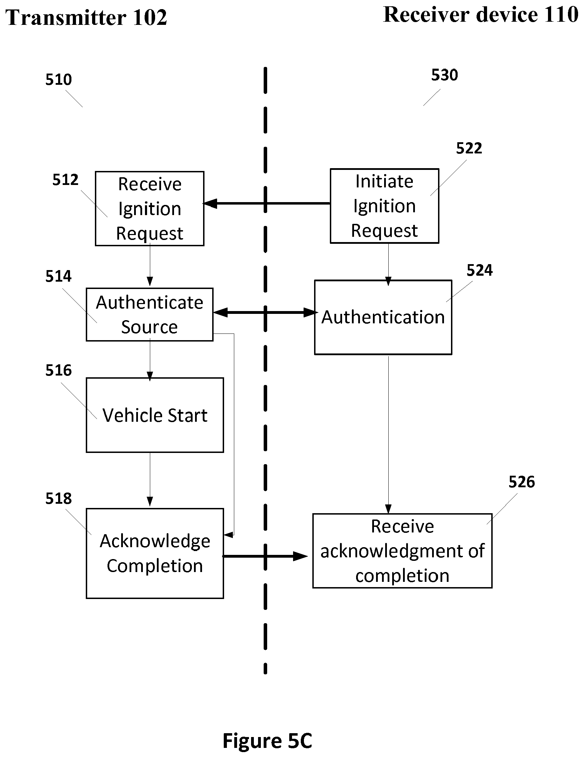

Figures 5B and 5C illustrate an example automotive system 500 with a vehicle start according to some embodiments. As illustrated in Figure 5B, automotive ignition system/charger 506 includes transmitter 102 as described above that is coupled to an automotive system ignition 502. In some embodiments, controller 210 of transmitter 102 is coupled through interface 220 to automotive system ignition 502 and instructs ignition 502 to start the vehicle when particular conditions are met. As is illustrated in Figure 5B, transmitter 102 is as described with respect to Figure 2C where power 104 receives power from the battery of the vehicle, which is usually a 12V battery. As described above, power and control is provided to inverter 204 that drives current is driven through transmit coil 108 so that the power can be transmitted to a wireless power receiver 110 that is built into a portable device. As illustrated in Figure 5B, wireless power receive device 110 includes a receive coil 112, which can be placed proximate to transmit coil 108 in order that wireless power is transferred from transmitter 102 to receive device 110. Receive device 110 can be digital key 502 or smart phone 504 as discussed with respect to Figure 5B.

Furthermore, transmitter 102 can be in communications with receiver device 110 through bi-directional communications channel 120, which has been discussed above. For example, transmitter 110 can include a modulator 202 and demodulator 206 coupled to controller 210 and wireless controller 208 to modulate, for example frequency modulate, the wireless power signal generated at transmit coil 108. Consequently, data can be sent from transmitter 102 to receive device 110. Further, receive device 110 can amplitude modulate the power signal, for example by modulating a load 238 on the received power, in order to transmit data to transmitter 102. Therefore, transmitter 102 and receive device 110 can be in communications through communications channel 120 that operates on the transmitted wireless power between transmit coil 108 and receive coil 112.

As discussed above, transmitter 102 can be embedded within the automotive system where it can be hidden from view and provide a useful platform on which receive device 110 can be placed for charging. As such, receive device 110 can be any battery powered device such as a smart phone, tablet, small computer, or other device. In accordance with some embodiments, receive device 110 communicates with the internet or other remote network through cloud 270, either through direct wireless internet connection or through a cell phone connection as discussed above. In some embodiments, receiver device 110 may not include an internal battery and operates only in the presence of wireless power transmitter 102. In that case, power 116 provides power to receiver 110 from wireless power received by wireless power receiver 114. As is illustrated, wireless power receiver 114 further includes demodulator 232 and modulator 236 to communicate with transmitter 102 through communications channel 120.

In some embodiments, device processor 240 of receive device 110 and controller 210 of transmitter 102 each execute an application that facilitates the starting of the vehicle system through automotive ignition system 502. In some embodiments, receive device 110 and transmit device 102 can execute a security procedure to validate transmitter 102 and receiver 110 before communications can begin. In some embodiments, the application and receive device 110 can be operated by the operator of the vehicle in which ignition system/charger 506 is embedded.

Figure 5C illustrates example algorithms 510 and 530, which operate on ignition system/charger 506 and receiver device 110, respectively. Algorithm 510 can be executed on controller 210 of transmitter 102 in ignition system/charger 506, which is coupled to automotive system ignition 502 that actually starts the vehicle. Algorithm 530 operates on device processor 240 of receive device 110, which can be either fob 502, smart phone 504, or other receiving device capable of executing the instructions to interact with ignition system/charger 506.

As illustrated in Figure 5C, algorithm 522 of algorithm 530 executes the ignition request and communicates that request to step 512 of algorithm 510. In some embodiments, the ignition request is sent by step 522 when receive device 110 is placed proximate to ignition/charger system 506. In some embodiments, the ignition request is sent by step 522 when a user provides user input to receiver device 110. In some embodiments, the ignition request may include an identification code identifying the user or the identity of receive device 110.

From step 512, algorithm 510 may proceed to an authentication step 514. Authentication step 514 communicates with authentication 524 of algorithm 530 to determine whether the ignition request is valid. As discussed above, authentication may include a key code that the user inputs to receive device 110, may include authentication codes stored in receive device 110, or may user another process. In some cases, the operator may be required to perform some further tasks (e.g. provide further identification, provide breathalyzer data, or other tasks) with receive device 110 before being authorized to start the vehicle system. If authorization fails in steps 514 and 524, algorithm 510 may lock out the user for a period of time from starting the vehicle and transmitter 102 may exit algorithm 510 or proceed to step 518.

Once authentication has been completed between steps 514 and 524, algorithm 510 proceeds to step 516 while algorithm 530 proceeds to step 526 if authentication is successful. In step 516, controller 210 communicates with automotive system ignition 502 to physically start the vehicle. Once the vehicle has started, or if authentication in step 514 is unsuccessful, algorithm 510 proceeds to step 518 to acknowledge the start to step 526. If the vehicle does not start in step 516, in some embodiments an error code may be sent to step 526, which may start the process over or inform the user that the vehicle will not start.

Consequently, as discussed above, a vehicle can be started by placing receiving device 110 proximate to wireless power charger 102 and issuing a start command from receive device 110. In some embodiments, wireless power charger 102 operates a security procedure to authenticate receive device 110 through the in-band communications system of communications channel 120. In some embodiments, encryption may be used in algorithms 510 and 530 communication authentication codes. A start engine command can be executed from receive device 110 or from a separate start/stop button, which is then enabled by the presence of a validated receive device 110. During operation of the motor vehicle, receive device 110 is charged by the wireless power charger 102 of ignition/charger 506.

### Security Lock Systems

Electronic locks, and especially electronics locks in a hotel or apartment building context, are difficult to scale and require significant internal processing. In particular, conventional electronic locks read an access card, validates the access card, and then opens the lock when the card is validated. This process results in each lock itself having significant processing capabilities, access to a validation system, and mechanical systems that, when operated, tend to consume power readily and thus require wired power sources or battery power sources. Both sources of power are limited due to doors that cannot contain wired power and or batteries that need to be replaced frequency and often fail without advance warning. Consequently, there is a need for a system that authenticates a user before opening a wirelessly power electronic lock while powering the locking mechanism. Currently, hotel and other systems do not have a secure way of opening the locks besides using door key cards or keys. Embodiments of the present invention provide for authentication of the user in a mobile device and powers the lock from the mobile device through wireless power transfer.

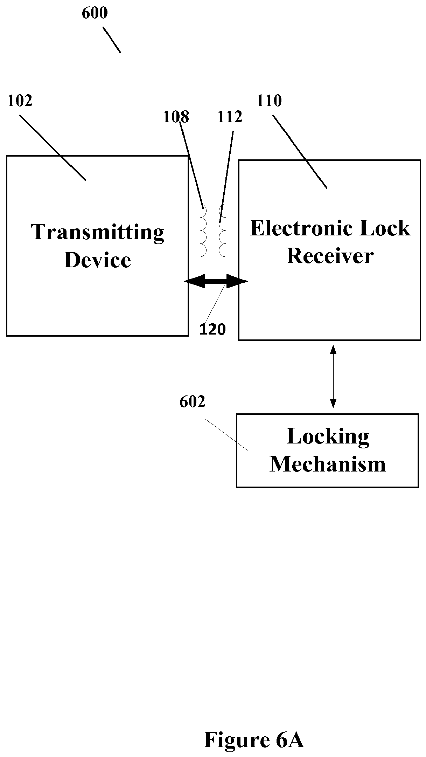

Figure 6A illustrates an example wireless power transmission system 600 that illustrates interaction between a transmitting device 102 and receiver device 104 to activate locking mechanism 602. As illustrated in Figure 6A, transmitting device 102 is coupled to drive a transmission coil 108 to provide power to receive coil 112 and power an electronic lock receiver 110. Electronic lock receiver 110 is coupled to power and control locking mechanism 602.

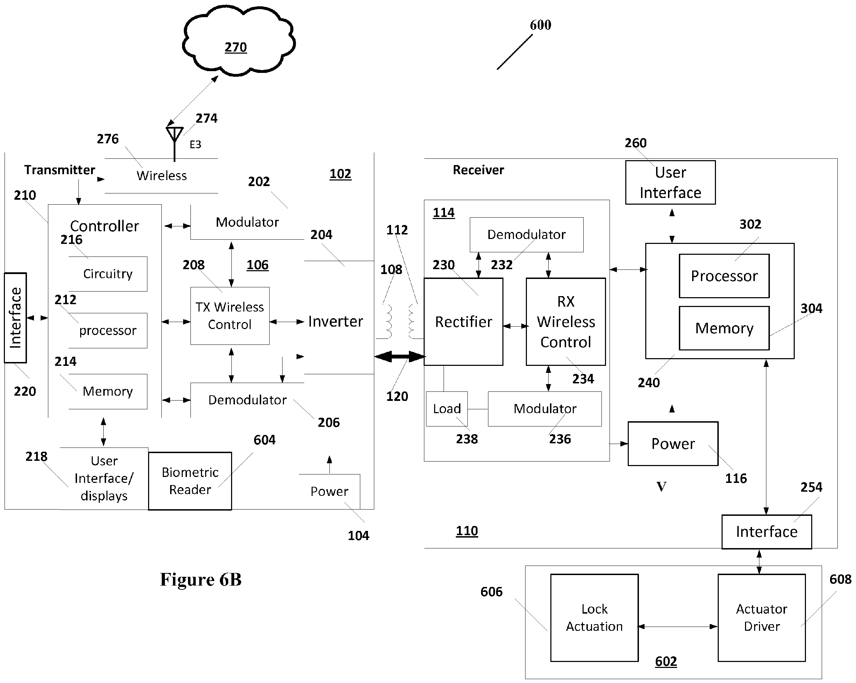

Figure 6B illustrates an example of system 600 in more detail. As illustrated in Figure 6B, transmitter 102 may include wireless interface 276 that allows internet access through cloud 270. Transmitter 102 can be, for example, a smart phone, tablet, or a dedicated controller. Further, transmitter 102 provides wireless power as discussed above, which can be received by receiver device 110. Receiver device receives the wireless power in wireless power receiver 114 and powers power block 116. Power block 116 provides power to further circuits such as device processor 240 as well as providing power for E-lock locking mechanism 602. In some embodiments, receive device 110 does not include a battery so that, without wireless power received from transmitter 102, receive device is unpowered.

As is further illustrated in Figure 6B, E-lock mechanism 602 includes an actuator driver 608 coupled through interface 254 to device processor 240. Actuator driver 608 drives and activates a lock actuation 606, which mechanically locks and unlocks the mechanical lock. E-lock mechanism 602 is powered from power block 116.

As is illustrated in Figure 6B, in some embodiments of the present invention, a biometric reader 604 can be used to authenticate a user (Heart rate, ECG, finger printing) before transmitter device 102 and receiver device 110 activates E Lock mechanism 602. Additionally, one can add another layer of security when transmitting device 102 needs to be connected to the local network (WiFi or Ethernet). A user could be authenticated by the biosensor on the phone or transmitting device (so the user information is safe and stays personal) and the user can be further authenticated by the hotel when connected to the hotel's local network or via the local hotel application and can receive a key code through the internet access. After both authentications, the app will enable a wireless transmitter with a unique code that will open the lock. In this manner the hotel key only resides in the user's phone or hotel server and the user credentials reside in user's phone. Also, the lock will require no additional DSP for verify user credentials, which reduces the overall overhead and associated costs of deploying and maintaining such E Locks by the hotel or apartment buildings in which it is deployed.

As discussed above, transmitter 102 may be part of a user's smart phone or it may be part of a dedicated device specifically designed to power and communicate with receiver device 110. Receive device 110 is part of an E-lock and therefore is fixed at the location of the lock. The lock may be, for example, a door lock, cabinet lock, chest lock, or other locking mechanism. Transmitter device 102 and receiver device 110 communicate through communications channel 120 as discussed above. Receive device 110 can actual E-lock mechanical device when transmitter 102 provides authentication. Authentication may be, for example, in the form of a unique key-code that is recognized by device processor 240.

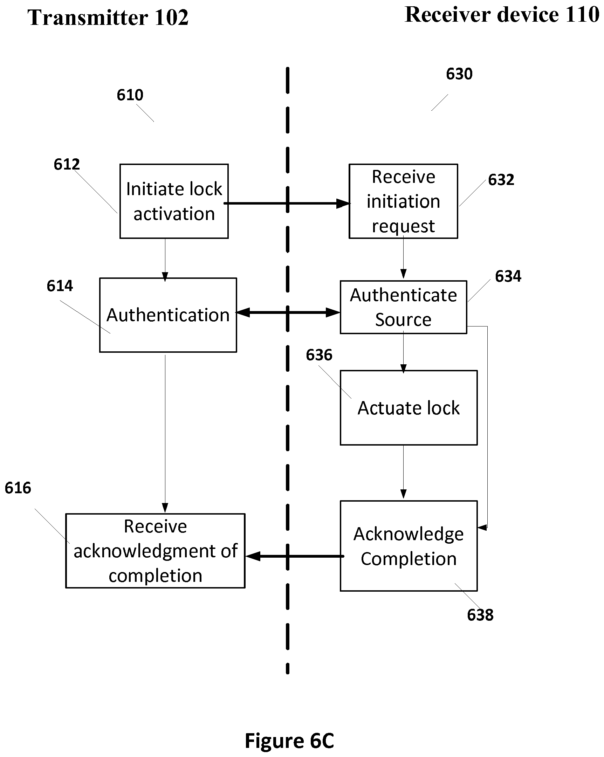

Figure 6C illustrates algorithm 610 that operates on controller 210 of transmit device 102 and algorithm 630 that operates on device processor 240 of receive device 110. As illustrated in Figure 6B, algorithms 610 and 630 can operate once transmitter device 102 is brought into proximity of receive device 110 so that wireless power can be transmitted to receive device 110, which may otherwise be unpowered. Once powered, algorithm 610 can start in step 612, where a lock activation request is initiated. The initiation request can further be provided to step 632 executing in receive device 110. In step 614 of algorithm 610 and step 634 of algorithm 630, authentication is performed. As discussed above, authentication can involve a biometric confirmation of the user's identity, access key receipts from a local area network, transmission of a unique key-code stored in transmitter 102, or other mechanism. Once authentication is complete and the user identity is confirmed in steps 614 and 634, algorithm 610 proceeds to acknowledgment step 616 while algorithm 630 proceeds to lock actuation step 636. If authentication fails, algorithm 630 proceeds to step 638 to report a failure to authenticate. In step 636, the locking mechanism 602 can be actuated to either lock or unlock, depending on the initiation request. In step 616 of algorithm 610, if a positive acknowledgment is received then algorithm 610 exits. However, if a failure is reported, then algorithm 610 reports to the user and may return to step 612 to start over.

### Data Back-up and Storage System

Embodiments of the present invention can transfer files between the receiving device and the transmitting device during the wireless power transfer process. Examples can include back-ups of mobile device file while the mobile device is being charged by transmitter 102. Other examples include uploading of files or updates to the mobile device by transmitter 102 during wireless power transmission. Yet another example is exchange of data between a transmitter device 102 and receiver device 110 during wireless power transfer. Data can be exchanged during the back-channel communications channel 120 between the transmitter 102 and receiver device 110. As is discussed above, the transmitter 102 can transmit data to the receiver using frequency shift keying (FSK) or frequency phase modulation while the receiver device 110 can transfer data to the transmitter 102 using amplitude shift keying (ASK).

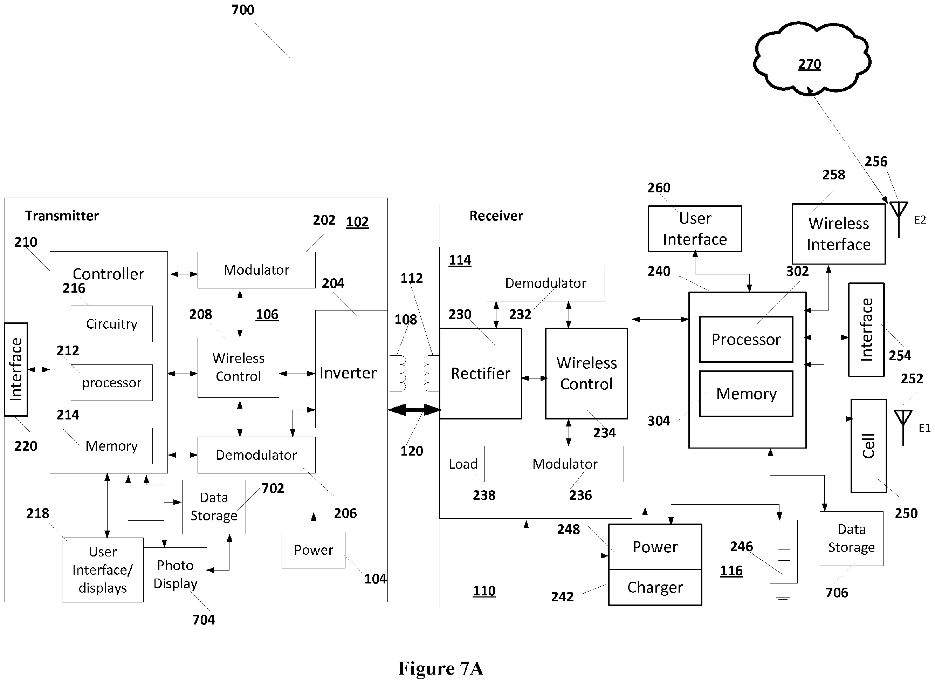

Figure 7A illustrates a system 700 where transmitter 102 includes a data storage 702 coupled to controller 210. As discussed above, transmitter 102 provides wireless power through transmit coil 108 and exchanges data with receive device 110 through communications channel 120. Figure 7A illustrates a case where transmitter 102 includes an FSK modulator 202 and an ASK demodulator 206 that is coupled to communications channel 120. As discussed above, controller 210 includes instructions to control the transmission of power, transmit data to receiver device 110, and receive data from receive device 110.

Controller 210 is further configured to store data in data storage 702 and retrieve data from data storage 702. Data storage 702 may be memory or any other data storage device such as, for example, an SD card. In that way, data may be received from receiver device 110 and stored in data storage 702. Consequently, photos, new contacts, downloaded files, or other data may be received during the wireless power transfer process and stored in data storage 702. Consequently, a back-up of the data stored on receiver device 110 can be made on data storage 702. In some embodiments, the back-up data stored in data storage 702 can also be retrieved to recover lost data on receiver device 110. Additionally, transmitter 102 may include a photo display device 704 that displays photos downloaded from receiver device 110 and displayed. One skilled in the art may devise of other variations for embodiments of the present invention.

Figure 7A further illustrates receiver device 110. As discussed above, receiver device 110 can be a mobile phone, tablet, or other mobile device. Receiver device 110 receives power from wireless power transmitter 102 through receive coil 112. Receiver device 110 further includes a modulator 236 to provide ASK modulated data to transmitter 202 and includes a demodulator 232 to receive FSK modulated data from transmitter 102 through communications channel 120. As is further illustrated in Figure 7A, receive device 110 includes a device processor 240, which includes a processor 302 and memory 304 as described above. Memory 304 includes volatile and non-volatile memory and stores data and programming instructions. Data can include photos, contacts, and other data. Further, controller 240 can be coupled with a data storage system 706, which can include memory storage as well as SD cards or other data storage devices.

As discussed above, data may be transferred between transmitter 102 and receiver device 110 through communications channel 120. Consequently, data stored on receiver device 110 may be backed up or transferred to transmitter 102. Further, receiver device 110 may receive data, including system updates and other data, from transmitter 102. Data may be used to update interactive devices or to modify behavior and functions of devices that are using wireless power and sharing data. Messages between people may be shared and retrieved securely using such methods as well.

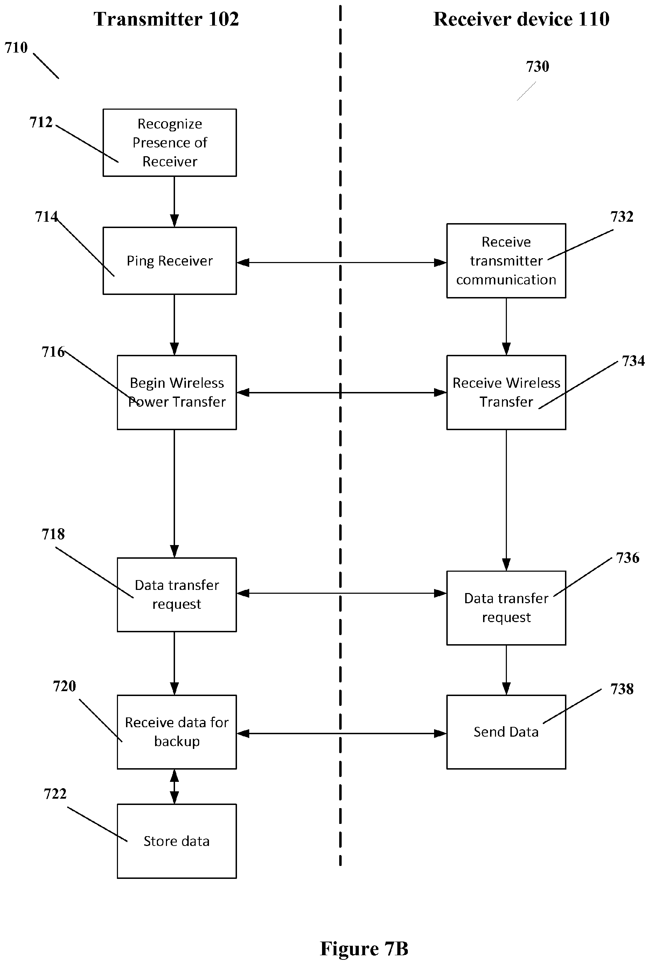

Figure 7B illustrates an algorithm 710 operating on transmitter 102 and an algorithm 730 operating on receiver 110, for backing up, or otherwise transferring, data from receiver device 110 to transmitter 102. As illustrated in Figure 7B, in step 712 transmitter 102 recognizes the presence of receiver device 110 and in steps 714 and 732 transmitter 102 and receiver 110 exchange data related to wireless transfer of power. In steps 716 and 734, transmitter 102 begins wireless power transfer and receiver device 110 receives the power transmitter by transmitter 102. In steps 718 and 736, transmitter 102 and receiver device 110 determine whether or not to perform a data transfer from receiver device 110 to transmitter 102. Steps 718 and 736 may further include an authentication step as described above in order. Either transmitter 102 or receive data 110 can initiate the query regarding data transfer with a setup request. Once a data transfer request has been provided and accepted, then algorithm 710 proceeds to step 720 and algorithm 730 proceeds to send data 738. Consequently, in steps 720 and 738, data is sent using communication channel 120 from receiver 110 to transmitter 102. In step 722, transmitter 102 stores the transferred data in data storage 702. It should be understood that steps 720 and 722 can be simultaneously performed in order that transmitter 102 receives and stores data.

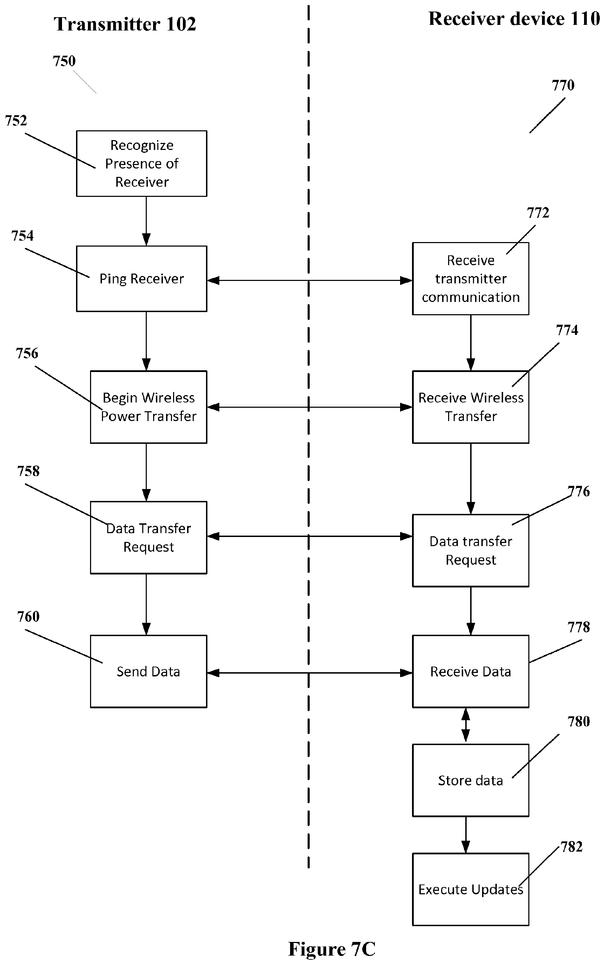

Figure 7C illustrates an algorithm 750 executed on transmitter 102 and algorithm 770 executed on receiver device 110 to transfer data from transmitter 102 to receiver device 110. As illustrated in Figure 7C, in step 752 transmitter 102 detects the presence of receiver device 110. In steps 754 and 772, transmitter 102 and receiver 110 exchanges messages regarding transfer of wireless power. In steps 756 and 774 wireless power transfer from transmitter 102 to receiver device 110 is initiated. In steps 758 and 776, transmitter 102 and receiver 110 exchange information regarding transfer of data to decide if the transmitter 102 is to send data to receiver device 110. This interaction can take many forms, including a request by receiver device 110 to receive data or a request by transmitter 102 to send data. Steps 758 and 776 may further include an authentication step as described above. In steps 760 and 778, data is transferred from transmitter 102 to receiver device 110 if data is to be transferred as determined in steps 758 and 776. In step 782, receiver 110 stores the received data. In step 7822, if there are updates to be performed, receiver device 110 performs the updates. In some embodiments, steps 780 and 782 can be performed together.

### Node statistics and updates

As discussed above, wireless charging transmitters are installed in many restaurants, hotels, and airport lounges. These transmitters are distributed throughout each of these facilities and need regular maintenance, not to mention that wireless charging standards keep updating to improve safety and user experience. Transmitters firmware/software can be reprogrammed to incorporate new standards specifications on a regular basis, as was discussed above with respect to firmware/software upgrades.

Also, because of wear and tear some of the wireless charging transmitters might over time become defective. Technicians working on the wireless charging infrastructure will create inconvenience to customers of the facilities, and can also result in a loss of revenue to facilities owners. Preempting a failure of the transmitter and fixing the transmitter prior to a failure is a lot better than reacting to the failed transmitter. Furthermore, it can be highly beneficial to a business such as a restaurant, hotel, or airport to monitor customer behavior in their facility. In a data-driven economy, monitoring and reacting to customer-use profiles can be beneficial to any business.

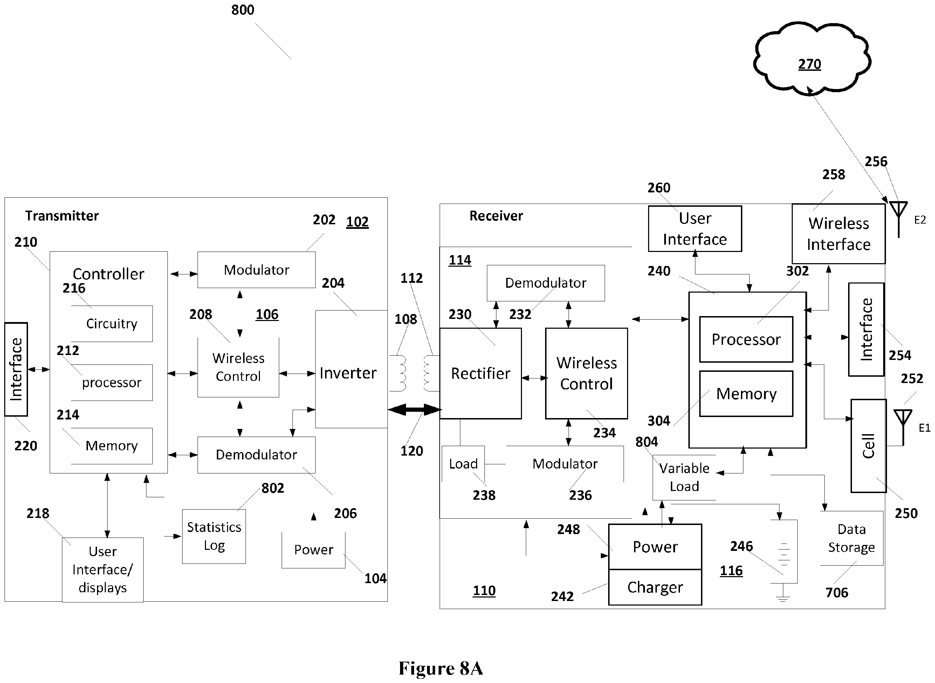

Figure 8A illustrates an example of a wireless power transmitter 102 interacting with a receiver device 110. Transmitter 102 and receiver device 110 can substantially be as discussed above starting with Figure 2C. Receiver device 110 can, as discussed above, be a mobile device such as a smart phone or tablet. Receiver device 110 can also be a dedicated test and monitoring device. As a test and monitoring device, receiver device 110 can include a variable load 804 that can be used in a test algorithm to analyze the performance of transmitter 102.

As is illustrated in Figure 8A, transmitter 102 can include a statistics log memory 802, which may be external from controller 210. Statistics log memory 802 can be any form of memory, including non-volatile solid-state memory, SD cards, or other forms of data storage. Controller 210 can then record the operation of transmitter 102 over time, including any error states that may occur.

As has been discussed above, receiver device 110 and transmitter 102 can be in communication through communications channel 120 to exchange data. In particular, the contents of statistics log 802 may be uploaded to receiver device 110. Further, receiver device 110 can perform tests on transmitter 102 to analyze the performance of transmitter 102. As discussed above, receiving device 110 is typically any battery powered device such as a smart phone, tablet, small computer, or other device. In accordance with some embodiments, communications device 110 communicates with the internet or other network through cloud network 270, either through direct wireless internet connection or through a cell phone connection. Receiver device 110 can, for example, communicate a failure and request to replace transmitter 102 through an internet site in cloud network 270.

As discussed above, transmitter 102 can be built into furniture or other platforms where it can be hidden from view and provide a useful platform for charging consumer devices such as receiving device 110. Additionally, wireless power transmitters such as transmitter 102 have been placed in many consumer accessible places, for example restaurants, airport lounges, transportation services (trains, busses, and cars) or other areas. Transmitter 102 can be built into furniture or other platforms that are easily accessible to the consumer.

Using traditional methods for reprogramming the firmware/software in transmitter pads such as transmitter 102 that is embedded in furniture requires the physical disassemble and re- assemble of the furniture. It is a very painstaking process to update the firmware/software or repair the components of transmitter 102 using traditional methods. Further, many facilities with wireless charging transmitters 102 do not have a down time in which facilities are empty. They are open 24Hrs. Technicians working on the wireless charging infrastructure, therefore, will create inconvenience to customers of the facilities and sometimes there will be a loss of revenue to facilities owner.

In many installations (for example restaurants, hotels and Airport lounges) wireless charging transmitter 102 is installed by some third part company. Further, the owners of the facilities do not have the technical expertise and do not want to spend too much money in maintaining transmitter 102. Additionally, the Wireless Power Consortium (standards committee) continues to improve the Qi standard to improve safety and user experience. Other standards are also constantly improving. In these cases, the firmware/software in processor controller 210 of transmitter 102 should be reprogrammed periodically to incorporate the new standards specification, as has been discussed above with firmware/software updates. Furthermore, the consumer standard transmitters 102 typically do not have a direct mechanism to update the firmware/software on transmitter 102 (or pad) to get service to the latest Qi standard

As illustrated in Figure 8A, receive device 110 is coupled to network 270. Consequently, firmware/software upgrades for transmitter 102 can be transmitted from an internet source in network 270 to receive device 110 and transmitted to transmitter 102 through the bi-direction communications of communications channel 120. Consequently, using Bi-directional communications the receiver (Rx) can transmit the update data to transmitter (Tx). This process is described above with respect to Figures 3A and 3B.

In some embodiments, receive device 110 can be a test phone or test receiver, or can execute an application which makes it a test phone or test receiver. The receive device 110, as illustrated in Figure 8A, can include a variable load 804 and can step through various loads and collect transmitter performance statics using the bi-directional communication of communications channel 120. Using that data and machine learning models, it can be predicted whether transmitter 102 is going to fail, in which case that transmitter 102 can be preemptively serviced before it completely fails.

In some embodiments, receive device 110 is a dedicated special receiver that can be used by a facilities owner for testing and analyzing transmitter 102. These special receivers can pass TX authentication, using bi-directional communications, and the special receiver device 110 can then collect a lot of TX stats from transmitter 102. Such data can include usage time, receiver model types charged on that transmitter 102, and other data. Using the data, the facilities owner gets usage heat map of the facility and, in some cases, demographic data of customers using the infrastructure.

In some embodiments, when receiver device 110 is placed on transmitter 102 there can be special checks to see whether transmitter 102 (the node) was serviced recently or whether it is past due for service. In some embodiments, receiver device 110 can run an application that performs these checks while being charged by transmitter 102. Upon reviewing those records receive device 110 can inform the end user about any violation of servicing agreements/ schedule of the TX nodes (transmitter 102) to let the user make appropriate decisions. Also, receive device 110 can upload such information through network 270 (the cloud) where such transmitter 102 can be added to a revocation to prevent future charging until such servicing is accomplished or a violation is cured. In some embodiments, transmitter 102 can form networks via some networking connection. Such network connection can be formed locally through interface 220. Consequently, such revocation information can be passed onto other transmitters 102 for polling information about their service schedule and maintenance.

As is further discussed, transmitter 102 can authenticate receive device 110 and then, upon validation or authentication of receive device 110, can decide to share information, for example that stored in statistics log 802, with receive device 110 on its maintenance schedule log. In some embodiments, receive device 110 can send that information to a server through network 270 or, if receive device 110 is a testing device, can store the information for future action.

Additionally, channel 120 between the transmitter (TX) 102 and receive device (RX) 110 can be used to gather statistical information about the case of overload or HVOD and store such information based on the unique manufacturer ID. In this case such information could include position of communications device 112, weather conditions, applications running and load conditions. In the future, these gathered statistics can used to adjust the power of transmitter 100 in case of similar phone as communications device 112 with same applications running in order to better protect the phone (communications device 112).

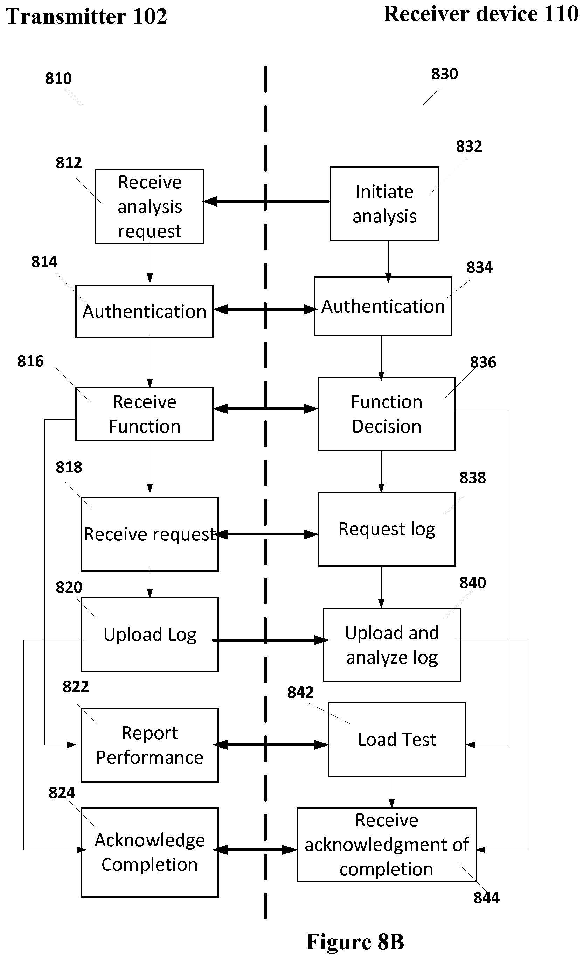

Figure 8B illustrates algorithm 810 that operates on controller 210 of transmitter 102 and algorithm 830 that operates on device processor 240 of receiver device 110. Algorithms 810 and 830 can execute once wireless power transfer is established so that the bi-directional communications of channel 120 can be used. As illustrated in Figure 8B, an analysis is started by receiver device 110 in step 832. In step 832, an analysis of transmitter 102 is initiated. The initiation can be responsive to a user input, when receiver 110 is a dedicated analysis device, can start automatically. Algorithm 830 can communicate initiation of the analysis to initiate step 812 of algorithm 810. From step 812, algorithm 810 proceeds to authentication 814. Similarly, algorithm 830 proceeds to authentication step 834. Transmitter 102 authenticates receive device 110 as discussed above, for example by receiving a recognized key-code from receive device 110. In some embodiments, the process and potential the following data transmission can be encrypted.

Once authentication is completed in steps 814 and 834, algorithm 810 proceeds to step 816 and algorithm 830 proceeds to step 836. In step 836, receive device 110 determines the type of analysis. In the example illustrated in Figure 8B, function decision step 836 determines between a log upload and analysis or a load test. Once the analysis function is determined in step 836, that decision is communicated to step 816 in step 810. Function decision 836 may decide based on a user input.

If a log analysis is decided, then algorithm 810 proceeds to step 818 and algorithm 830 proceeds to step 838. In step 838, all or a portion of the data recorded in statistics log 802 is requested and communicated to step 818 of algorithm 810. In step 820, the requested portions of the data in statistics log 802 is uploaded to step 840. In step 840, algorithm 830 receives and analysis the data received. During the analysis, algorithm 830 can determine faults, violations, or needs for firmware/software updates. From step 840, algorithm 830 proceeds to acknowledgment 844. Algorithm 810 proceeds to acknowledgment 824 after performance of step 820. In acknowledgment 844, receive device 110 can report any issues regarding transmitter 102 to transmitter 102 and further may report such data to an internet site through network 270.

If a load test is decided, then algorithm 810 proceeds to report performance 822 and algorithm 830 proceeds to load test 842. In load test 842, receive device 110 provides various loads for the received wireless power and monitors the performance of transmitter 102. Transmitter 102 can further accumulate performance data and report that data in step 822 to load test 842 through communications channel 120. Load test 842 can provide the results of the tests through acknowledgment 844, which reports to step 824 of transmitter 102.

In some embodiments, the data stored in statistics log 802 of transmitter 102 can be cleared after uploading to receive device 110. In some embodiments, variable load 804 of receiver device 110 can be performed by normal functions of receiver device 110 and in some embodiments variable load 804 may be an additional component of receiver device 110.

### E-Commerce Applications

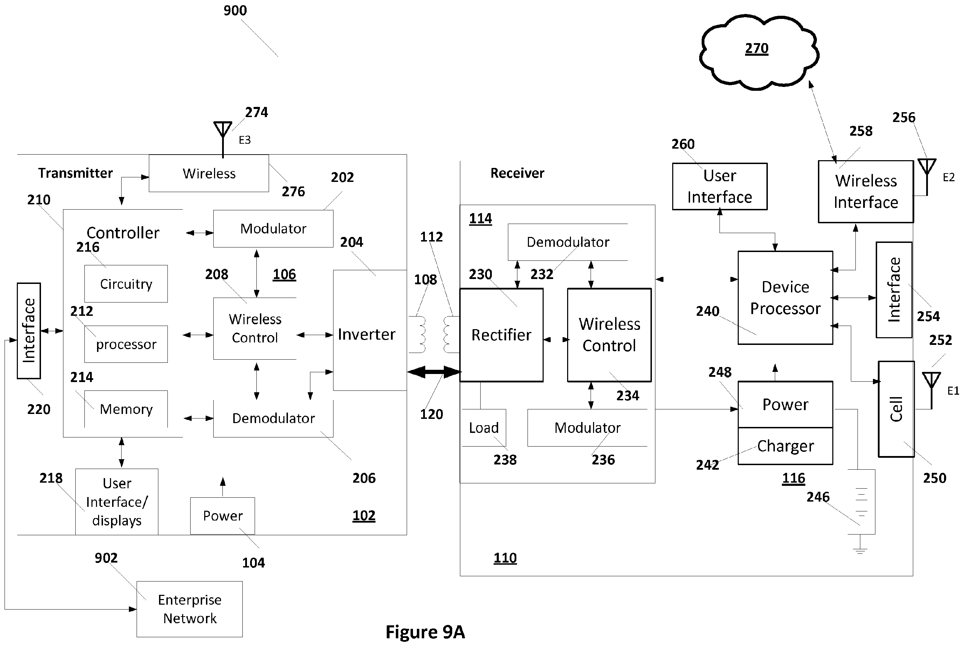

As discussed above, wireless charging transmitters 102 can be installed throughout an enterprise such as restaurants, hotel, airport lounge, or other establishment. Transmitters 102 are distributed throughout each of these facilities and therefore can be used to communicate with a central server 902 in the establishment, as is illustrated in Figure 9A. As such, user services can be provided to users with authenticated receiver devices 110 placed proximate to one of these wireless charging transmitters 102. Once authenticated, user services can be provided to receive device 110. These user services can include, for example, providing access to internet services, providing access codes to restroom facilities, taking orders for food or drink, summoning service personnel, payment of bills, and other services. Further, it is highly beneficial to a business such as a restaurant, hotel, or airport, to monitor customer activity in the facility as well as to provide better services to customers in the facility. In a data-driven economy, monitoring and reacting to customer use profiles can be beneficial to any business.

Figure 9A illustrates an example of a wireless power transmitter 102 in communications with a receiver device 110, as has been previously discussed. As illustrated in Figure 9A, transmitter 102 is coupled through interface 220 to a network 902. Network 902 can be any networking system and is often the local network for the enterprise in which transmitter 102 is installed. As such, network 902 can provide services to receiver device 110 through transmitter 102 using communications channel 120.

As discussed above, transmitter 102 can be built into furniture or other platforms where it can be hidden from view and provide a useful platform for charging consumer devices such as receiver device 110. As such, receiver device 110 is typically any battery powered device such as a smart phone, tablet, small computer, or other device. In accordance with some embodiments, receiver device 112 communicates with the internet or other remote network 116, either through direct wireless internet connection or through a cell phone connection.

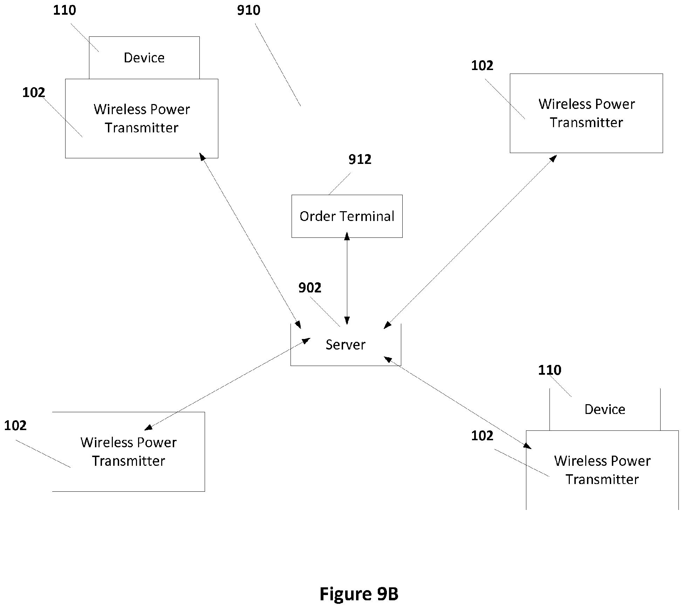

Figure 9B illustrates an example of an enterprise network 910 according to some embodiments. As is illustrated in Figure 9B, a number of wireless power transmitters 102 are distributed throughout the establishment. Each wireless power transmitter 102 is coupled to exchange data with one or more servers 902. Server 902 can further be coupled to a terminal 912, through which customer orders received on a wireless power transmitter 102 from a receive device 110 can be relayed. Receive devices 110 can be placed proximate to a wireless power transmitter 102 and, since the positions of transmitters 102 are known, the location at which services can be provided is known. Consequently, enterprise personnel who receive orders at order terminal 912 known the location of the device 110 that placed the order.

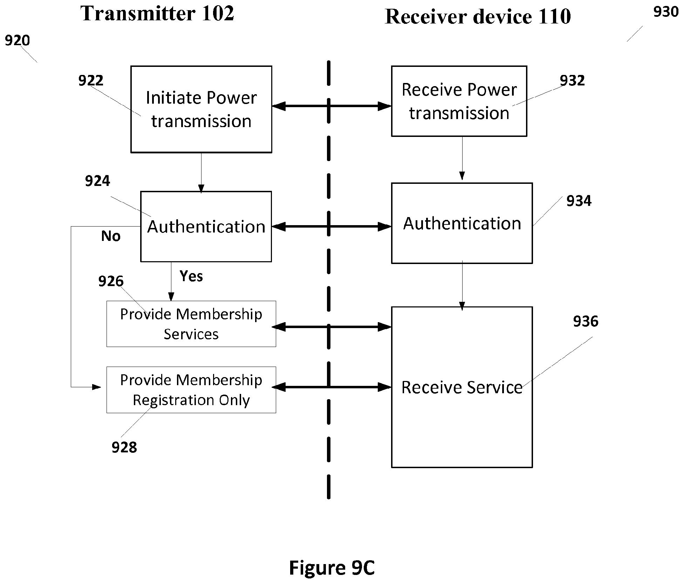

Figure 9C illustrates a flow chart of an algorithm 920 operating on controller 210 of transmitter 102 and/or on processors of network 902. Algorithm 920 interacts with an algorithm 930 operating on device processor 240 of receive device 110 when wireless power is being transferred to receive device 110. Transmitter 102 is a member of network 910 as illustrated in Figure 9B and therefore controller 210 communicates with enterprise network 902. Further, controller 210 can interact through communications channel 120 with a receive device 110 that placed proximate to transmitter 102.

As discussed above, algorithm 920 can be performed in a wireless power transmitter 102, network server 902, or a combination of wireless power transmitter 102 and network server 902. As is illustrated in Figure 9C, algorithm 920 begins in step 922 when wireless power transmitter 102 detects the presence of receive device 110. Step 922 of algorithm 920 interacts with step 932 of algorithm 930 to initiate and being wireless power transmission. As is discussed above, transmitter 102 and receiver device 110 communicate through the bidirectional communications channel 120.

In step 924 of algorithm 920 and step 934 of algorithm 934, an authentication process is performed to confirm that receiver device 110 is certified to receive services. In some embodiments, transmitter 102 requests authentication in step 924 and receiver device 110 responds to the request in step 934. Further, in step 924, algorithm 920 determines whether receive device 110 has replied with proper authentication. In some embodiments, proper authentication can be provided by a certificate, by exchange of encryption keys, by user login, or by other methods.

If it is determined in step 924 that receive device 110 is an authenticated device, then algorithm 920 proceeds to step 926 where member services are provided. Algorithm 930 of receive device 110 can proceed to step 936 where services are received and provided to a user and provides an interface for the member user to receive services through, for example, user interface 260. A certified (authenticated) receive device 110 can obtain membership services, which can include discount coupons, event notification, free access to Wi-Fi connections, menu ordering services through device 110, and payment services through device 110. Such services can also include targeted marketing advertisements or distributed generalized marketing advertisements. Other services can also be obtained through authenticated device 110 communicating through wireless power transmitter 102 and network 902.

If, in step 924 of algorithm 920, authentication cannot be confirmed, then algorithm 920 proceeds to step 928 where only non-member services are provided. Non-member services may include providing a membership registration link to obtain a certifying certificate and become an authorized device. In either case, device 110 can be charged using the wireless power transmitter 102.

### Contextual Awareness Applications

As discussed above, hundreds of wireless charging transmitters 102 are installed in many restaurants, hotels, and airport lounges. As shown in Figure 2, transmitters 102 are distributed throughout each of these facilities. As discussed above, each of these transmitters 102 can communicate to a receive device 110 that is placed proximate to transmitter 102 through communications channel 102. In some embodiments, transmitter 102 is located at a known location and stores its exact geographic location, including elevation, in memory 214 as an operating parameter. Consequently, a receive device placed proximate to transmitter 102 and communicating with transmitter 102 through bi-directional communications channel 120 can receive the exact location of transmitter 102, on which receive device 110 is positioned, from transmitter 102.

As discussed above, receive device 110 is typically a battery powered device such as a smart phone, tablet, small computer, or other device. In accordance with some embodiments, receive device 110 communicates with the internet or other remote network 270, either through direct wireless internet connection or through a cell phone connection. As illustrated in Figure 2, In some embodiments, wireless power transmitter 102 may also communicate to remote networks 270.

As discussed above, transmitter 102 can be built into furniture or other platforms where it can be hidden from view and provide a useful platform for charging consumer devices such as receive device 110. Wireless power transmitters such as transmitter 102 have been placed in many consumer accessible places, for example restaurants, airport lounges, transportation services (trains, busses, and cars) or other areas. Transmitter 102 can be built into furniture or other platforms that are easily accessible to the consumer.

As such, in many cases, the position of transmitter 102 is fixed. The position of transmitter 102 can then be stored in memory 214 of controller 210 and transmitted to receive device 110 through bi-directional communications channel 110 to allow receive device 110 to receive its exact location. Locations, for example, can be designated by GPS location, elevation, address, building floor, or even individual room of a building, or even location within that room.

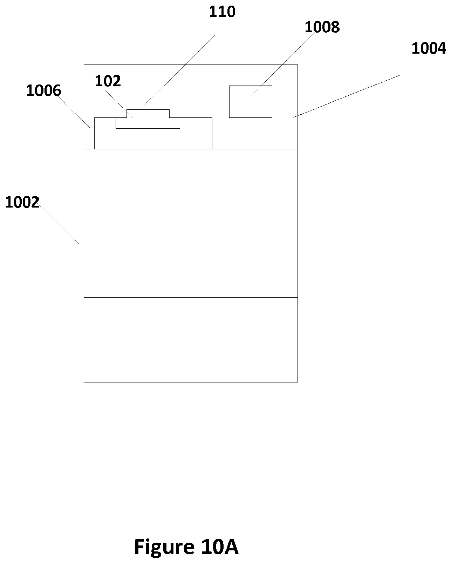

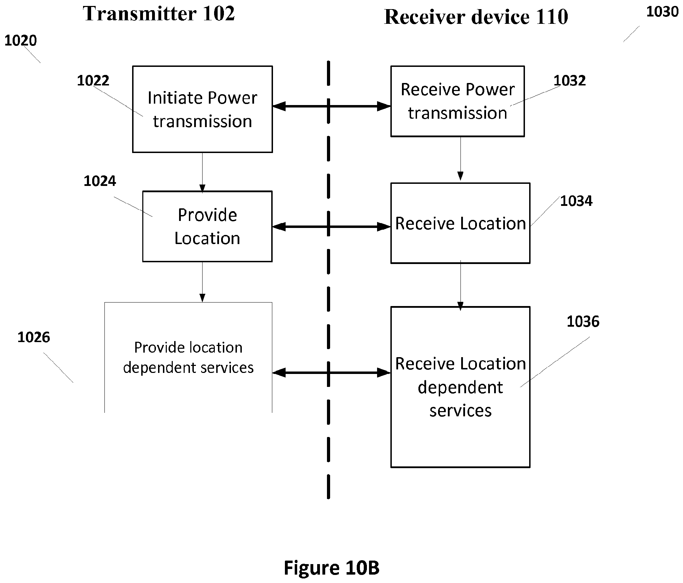

Figure 10A illustrates such an arrangement. As illustrated in Figure 10, transmitter 102 is embedded within a particular installation 1006 (e.g., furniture) that is located in a particular room of a floor 1004 of a building 1002, which has an address. In some embodiments, this location information is stored in memory 214 of controller 210. The information may be loaded into transmitter 102 during installation of transmitter 102, or may be provided by a network 902 to which transmitter 102 is coupled as illustrated in Figure 9B. Transmitter 102 may communicate the location information to a receiver device 110 when receiver device 110 is placed in proximity to receive wireless power from transmitter device 102. Transmitter device 102 and receiver device 110 can be devices as described above with respect to, for example, Figure 2 and transmitter 102 may be coupled to a network as is described above, for example with Figures 9A and 9B.

Figure 10B illustrates an algorithm 1020 that can operate on controller 210 of transmitter 102 interacting with an algorithm 1030 operating on device processor 240 of receiver device 110. As illustrated in Figure 10B, algorithm 1020 initiates power transmission in step 1022 and algorithm 1030 receives the power transmission in step 1032. In step 1024 of algorithm 1020 and step 1034 of algorithm 1030, transmitter 102 communicates location information to receive device 110. As discussed below, such information can be provided by request or may be provided automatically by transmitter 102. In some embodiments, receiver device 110 may be used to input location data to transmitter 102 in steps 1024 and 1034. In some embodiments, receiver device 110 can execute step 936 where location dependent services are provided, either in step 1026 of transmitter 102 or directly to transmitter 102 through wireless interface 258 or cell network 250, for example. In some embodiments, information may be provided to a remote device 1008, which may be a video display or other device, based on the location of transmitter 102 and the presence of receive device 110.

The effectiveness of many activities can be increased with the precise position, orientation, and contextual awareness that is accomplished by knowing the exact location of receive device 110. Some examples include targeted advertising, emergency services, customization of customer services and experiences, selection and configuration of surrounding appliances for specific activities, and other benefits. Other information about any device containing wireless power can be logged by any memory and transferred by the wireless transmitter device 102 for sue by service personnel or consumers.

Presently, receive device 110 (e.g. a cell phone) can only be localized to a large area. This is accomplished through using Wi-Fi hot spots, using Bluetooth communication, using GPS/Satellite Navigation, or other wireless (e.g. NFC) and physical (e.g. barometric) sensors. One previous attempt at localization utilized a unique serial number to identify each transmitter 102. Although providing some value, the concept was not effectively used and proved ineffective.

As discussed above, the bi-directional communications between transmitter 102 and receive device 110 occurs during wireless power transfer between transmitter 102 and device 110. The bi-directional communications of communications channel 120 is robust enough to allow complex information to be communicated between transmitter 102 and device 110. This applies to both networked arrays of wireless power transmitters 102 (i.e. wireless power transmitters 102 are coupled to a local network as illustrated in Figure 9B) and un-networked wireless power transmitters 102.

The position of transmitter 102 within a facility with complex attributes can be transmitted to receive device 110 over communication channel 120. Consequently, emergency services know the precise location of the phone, e.g. the particular table in a particular room of a particular floor of a building where the phone is calling from in an emergency. Further, E911 class services can drive federal safety standards. In some embodiments, location information can be stored on transmitter 102 directly, or it may be stored in a central server that transmitter 102 is connected with, for example through interface 220, as is illustrated in Figure 9B.

In some embodiments, in steps 1024 and 1032 a table number or other identifier can be sent to receive device 110, which allows for services (such as automated payment system) to synchronize the payment system to the table it is on. In some embodiments, auto configuration of parameters for broadband connections (e.g., Wi-fi ID & Passwords) can be provided. In some embodiments, Bluetooth names and paring codes. (e.g. auto audio/stereos) can be provided. In some embodiments, International Location (e.g. changes due to Travel) can be transmitted to device receive device 110 based on the location of transmitter 102. This can provide Faster/Automatic configurations of phone carriers to local areas (PTx to PRx transmitted) or other parameters (E.G. GPS/nav sats in view, etc.).

In some embodiments, the receive device 110 can be used to locate transmitter 102 in steps 1024 and 1034. For example, the position of transmitter 102 can be sent to transmitter 102. Transmitter 102 can gain position from the receive device 110 location information or may be entered by a user of receive device 110. Mobile transmitter 102 can then obtained required functionality like E-911 location. Further, transmitter 102 can set wi-fi frequencies based on location in the world. Further, this process allows subsequent receive devices 110 to achieve an improved position.

In some embodiments, contextual awareness with respect to phone utilization can be sent back to the host system such as network 902 coupled to transmitter 202. For example, receive device 110 can determine, based on its interaction with transmitter 102, whether it is indoors or outdoors and set different GPS, Screen, Camera, or other phone configurations accordingly. Further, receiver device 110 can determine if receive device 110 is in a transportation vehicle: car or out of a car, in plane or out of plane etc. Appropriate parameters can be set (e.g., GPS, etc.) and transmitter 102 can inform receiver device 110 whether the conveyance is moving or not, in what direction, and at what rate.

Furthermore, the receiver device 110 can inform transmitter 102 what receive device 110 (e.g. the phone) is doing (games, TV, idle, talking). Consequently, marketing dollars will not be wasted if phone is busy or otherwise engaging the potential customer.

In some embodiments, a networked transmitter 102 can transmit information in steps 1026 and 1036 to receive device 102 to inform users of local issues and potential mitigations for those issues. These mitigations can include procedure for air quality control, fire / terrorism threats, or other emergency actions that are currently occurring at that location. Furthermore, transmitter 102 may provide instructions to exits and therefore provides a path to the nearest exit with active tracking which does not require access to local Wi-Fi or local knowledge of the user.

In some embodiments, the location information provided by transmitter 102 can include the orientation of the user while using transmitter 102. For example, if receive device 110 is on one side of a table, then the advertising management software knows in general where the user of receiver device 110 is looking. Consequently, ADs can be served to the phone on the products that are likely in front of the user. Further, ADs can be served to other devices (TVs, table stands etc.) that are coupled to transmitter 102 through network 902 which are oriented in such a way that they are visible to the user.

As discussed above, some embodiments use the bi-directional communications channel 120 between a wireless charging transmitter (PTx) 102 and a receive device (PRx) 110 such as a cell phone to exchange location information that can include Position Information (PTx 102 to PRx 110 or PRx 110 to PTx 102), Orientation Information (which side of Table 1006 transmitter 102, on which receive device 110 resides, is located), and/or Contextual Information (Activity associated with the PTx 102). This information can be used in the information economy (e.g. Serving Advertisements to the Local Device, Serving Advertisements to remote devices 1008 in close proximity and orientation to PRx 110). The information can also be used for emergency services (e.g., 911 class services, alerts and messages to the user (safety/egress plans), or other notifications).

### Wearable Devices, OTG devices. Outdoor devices. Waterproof and Dustless Devices

As discussed above, in some embodiments receive device 110 may be a wearable device such as a watch. Other such devices may include medical monitoring devices, atmospheric monitoring devices, or other such devices. Other similar devices may include On-The-Go devices such as speakers, speaker/microphone combinations, outdoor lighting, waterproof and dustless devices such as underwater cameras and the such. As such, transmitter 102 can be, for example, a smart phone that includes a wireless transmission function. In some embodiments, receive device 110 exchanges data and information with transmitter 102. In some embodiments involving medical monitoring, data may be downloaded as requested by transmitter 102 or a log may be downloaded when transmitter 102 is placed proximate to receive device 110. In some embodiments such as speakers, data is provided to receive device 102.

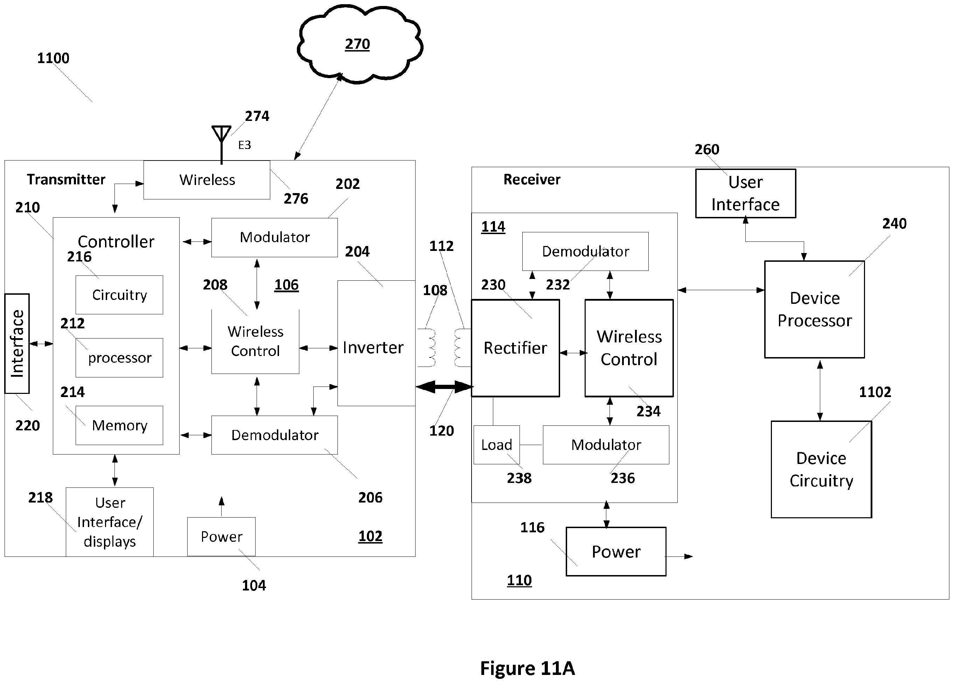

Figure 11A illustrates a receive device 110 according to some embodiments. Receive device 110 may or may not include a battery 246 in power block 116. In devices without a battery, receive device 110 may operate only when transmitter 102 is provided wireless power or may have limited operation in the absence of transmit device 102 (such as the case where a super capacitor is charged and allows short term usage between charging events). As such, receive device is completely powered by transmitter 102. Such devices include OTG devices and some wearable devices or any other device that would include wireless power receiver/charger for the purpose of temporary non-wired receipt of power. In the case of waterproof or dustless devices, charging of internal batteries 246 is performed and data (e.g. photos) is exchanged completely wirelessly. As illustrated in Figure 11A, receiver device 102 includes device circuitry 1102 to perform its functions. For example, if device 110 is a waterproof camera, device circuitry 1102 include control circuitry to operate the optics and to perform camera functions. If device 110 is a medical wearable device, device circuitry 1102 includes testing components to collect and test samples. Device circuitry 1102 may include any components, including speakers and speaker drivers, microphones and microphone circuitry, lighting and drivers for that lighting, and any other component.

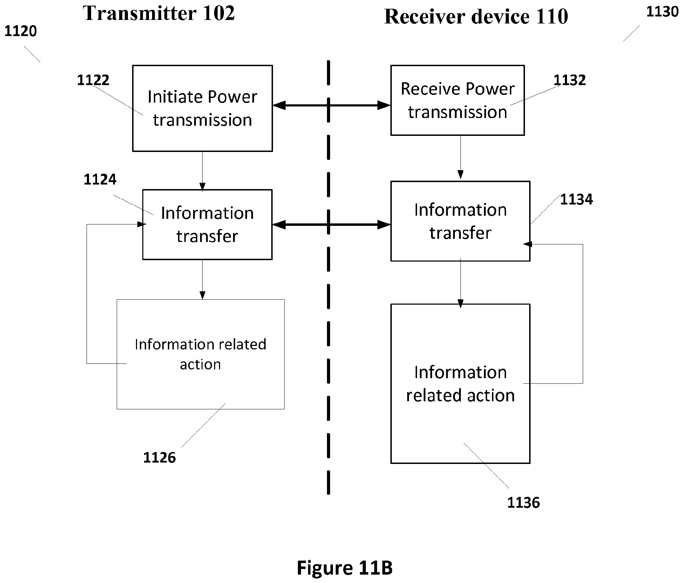

Exchanges of data can be performed as described above and further illustrated in Figure 11B. As illustrated in Figure 11B, algorithm 1120 is executed on controller 210 of transmitter 102 while algorithm 1130 is executed on device processor 240 of receiver device 110. While wireless data is being transferred from transmitter 102 to receive device 110, data as described above is exchanged in step 1124 of algorithm 1120 and step 1134 of algorithm 1130. As discussed above, in some embodiments an authentication step may be included in transfer steps 1124 and 1134. In some embodiments, such as for example if receiver device 110 is speaker or other such device, data is primarily transferred between transmitter 102 and receiver device 110. In some embodiments, such as for example medical wearables, data is primarily transferred between receiver device 110 and transmitter 102. In step 1126, transmitter 102 may perform some action in response to the data, for example storing the data. In step 1136 of algorithm 1130, receiver device 110 performs some action in response to the data, for example send audio data to speakers of device circuitry 1102.

The above detailed description is provided to illustrate specific embodiments of the present invention and is not intended to be limiting. Numerous variations and modifications within the scope of the present invention are possible. The present invention is set forth in the following claims.

## Claims

1. A wireless power transmitter, comprising:
an inverter coupled to a transmit coil;
a wireless controller coupled to operate the inverter to generate a wireless power signal at the transmit coil;
a controller coupled to the wireless controller;
a bi-directional communications channel that includes a modulator and a demodulator coupled to the controller, the bi-directional communications channel providing modulation and demodulation of data transmission signals on the wireless power signal,
wherein the controller exchanges functional data with a receive device placed proximate the wireless transmitter with the bi-directional communications channel to perform a function other than wireless power transmission.

2. The wireless power transmitter of claim 1, wherein the functional data includes a firmware/software update and wherein the controller executes instructions to
authenticate the receive device;
receive the firmware/software update if the receive device is authenticated;
update firmware/software; and
acknowledge the update if successful.

3. The wireless power transmitter of claim 2, wherein instructions to update firmware/software includes instructions to update firmware/software in the controller; or optionally, wherein instructions to update firmware/software includes instructions to update firmware/software in a device coupled to the wireless power transmitter.

4. The wireless power transmitter of claim 1, further including an automotive system ignition coupled to the controller, wherein the functional data includes vehicle ignition data and wherein the controller executes instructions to
authenticate the receive device;
start the vehicle with the automotive system ignition if authentication is successful; and
acknowledge if vehicle start is successful; or optionally,
wherein the receive device is an electronic lock, the functional data is authenticating data, and wherein the controller executes instructions to
authenticate itself to the receive device; and
request actuation of the electronic lock.

5. The wireless power transmitter of claim 4, further including a biometric reader and wherein the controller authenticates by providing a key to the electronic lock when a user of the wireless transmitter is authenticated with the biometric reader; or optionally, wherein the controller authenticates by providing a key to the electronic lock when a user of the wireless transmitter is authenticated.

6. The wireless power transmitter of claim 1, wherein the functional data is backup data and wherein the controller executes instructions to
authenticate the receive device;
receive the backup data from the receive device if authentication is successful; and
store the backup data; and optionally,
further including a data storage in which the backup data is stored.

7. The wireless power transmitter of claim 1, wherein the functional data includes maintenance data and wherein the controller executes instructions to
authenticate the receiver device; and
communicate maintenance data regarding the wireless power transmitter to the receiver device; and optionally,
wherein the maintenance data is performance data acquired when receiver device performs tests one the wireless transmitter to obtain performance data; and/or optionally,
further including a statistics log and wherein the controller stores performance data over time in the statistics log and the maintenance data include the contents of the statistics log.

8. The wireless power transmitter of claim 1, wherein the functional data includes member services and wherein the controller executes instructions to
authenticate the receive device; and
provide member services if authentication is confirmed; and optionally,
wherein membership services includes one or more of menu ordering, payment services, free Wi-Fi connections, and member notifications; and/or optionally,
wherein the controller provides a membership registration if authentication is not confirmed.

9. The wireless power transmitter of claim 1, wherein the functional data includes location information, and wherein the controller executes instructions to provide location of the wireless power transmitter to the receive device; and optionally,
wherein the location information includes orientation data.

10. The wireless power transmitter of claim 1, wherein the functional data is location data received from the receive device.

11. The wireless power transmitter of claim 1, wherein the functional data is contextually dependent on location of the wireless power transmitter; and optionally,
wherein the functional data includes one or more location dependent advertisements or notices, emergency services, safety alerts, exit routes, to the receiving device; and/or optionally,
further providing information to a third device in close proximity to the position of the wireless power transmitter.

12. The wireless power transmitter of claim 1, wherein the receive device is powered solely from the wireless power signal; and optionally, wherein the receive device is a wearable device, an on-the-go device, a waterproof device, or a dustproof device.

13. A method of operating a wireless transmitter, comprising
providing a wireless power signal;
exchanging functional data transmitted over a bi-directional communication channel on the wireless power signal with a receive device to perform a function other than wireless power transfer.

14. The method of claim 13, wherein the functional data includes a firmware/software update and further including:
authenticating the receive device;
receiving the firmware/software update if the receive device is authenticated;
updating firmware/software; and
acknowledging the update if successful; or optionally,
wherein the functional data includes vehicle ignition data and further including:
authenticating the receive device;
starting the vehicle with an automotive system ignition if authentication is successful; and
acknowledging vehicle start if successful; or optionally,
wherein the receive device is an electronic lock, the functional data is authenticating data, and further including:
authenticating itself to the receive device; and
requesting actuation of the electronic lock; or optionally,
wherein the functional data is backup data and further including:
authenticating the receive device;
receiving the backup data from the receive device if authentication is successful; and
storing the backup data.

15. The method of claim 13, wherein the functional data includes maintenance data further including:
authenticating the receiver device; and
communicating maintenance data regarding the wireless power transmitter to the receiver device; or optionally,
wherein the functional data includes member services and further including:
authenticating the receive device; and
providing member services if authentication is confirmed; or optionally,
wherein the functional data is contextually dependent on location of the wireless power transmitter; or optionally,
wherein the receive device is a wearable device, an on-the-go device, a waterproof device, or a dustproof device.

16. A wireless power receiver device, comprising:
a rectifier coupled to receive power from a wireless power signal at a receive coil;
a wireless controller coupled to operate the rectifier to generate power from the a wireless power signal;
a device controller coupled to the wireless controller;
a bi-directional communications channel that includes a modulator and a demodulator coupled to the device controller, the bi-directional communications channel providing modulation and demodulation of data transmission signals on the wireless power signal,
wherein the controller exchanges functional data with a transmitter proximate the wireless power receiver with the bi-directional communications channel to perform a function other than wireless power transmission.

17. The wireless power receiver device of claim 16, wherein the functional data includes a firmware/software update and wherein the device controller executes instructions to
authenticate the receive device to the transmitter; and
transmit the firmware/software update if the receive device is authenticated; or optionally,
wherein the functional data includes vehicle ignition data and wherein the device controller executes instructions to authenticate the receive device to the transmitter; or optionally,
further including
an electronic lock actuator drive coupled to the device controller; and
an actuator coupled to the electronic lock actuator driver,
wherein the functional data is authenticating data, and wherein the device controller executes instructions to
authenticate the transmitter; and
actuate the actuator through the electron lock actuator drive; or optionally,
wherein the functional data is backup data and wherein the device controller executes instructions to
authenticate the receive device; and
transmit the backup data to the transmitter if authentication is successful;
or optionally,
wherein the functional data includes maintenance data and wherein the device controller executes instructions to
authenticate the receiver device;
request maintenance data regarding the wireless power transmitter;
receive the maintenance data;
test the wireless power transmitter; and
analysis performance of the wireless power transmitter; or optionally,
wherein the functional data includes member services and wherein the device controller executes instructions to
authenticate the receive device; and
receive member services if authentication is confirmed; or optionally,
wherein the functional data includes location information, and wherein the controller executes instructions to provide location of the wireless power transmitter to the receive device; or optionally,
wherein the functional data is contextually dependent on location of the wireless power transmitter; or optionally,
wherein the receive device is powered solely from the wireless power signal.

18. A method of operating a wireless power receiver device, comprising
receiving a wireless power signal from a transmitter;
exchanging functional data transmitted over a bi-directional communication channel on the wireless power signal with the transmitter that provides the wireless power signal to perform a function other than wireless power transfer.

19. The method of claim 18, wherein the functional data includes a firmware/software update and further including:
authenticating the receiver device to the transmitter;
providing the firmware/software update if the receive device is authenticated; or optionally,
wherein the functional data includes vehicle ignition data and further including:
authenticating the receiver device to the transmitter;
requesting a vehicle start; or optionally,
wherein the receive device is an electronic lock, the functional data is authenticating data, and further including:
authenticating the transmitter; and
actuating of the electronic lock if the transmitter is authenticated; or optionally, wherein the functional data is backup data and further including:
authenticating the receive device and the transmitter; and
transmitting the backup data to the transmitter if authentication is successful; or optionally,
wherein the functional data includes maintenance data further including:
authenticating the receiver device to the transmitter;
communicating maintenance request regarding the wireless power transmitter; and
receiving maintenance data to from the transmitter; and
analyzing the maintenance data to determine a functional state of the transmitter;
or optionally,
wherein the functional data includes member services and further including:
authenticating the receive device to the transmitter; and
receiving member services if authentication is confirmed; or optionally,
wherein the functional data is contextually dependent on location of the wireless power transmitter; or optionally,
wherein the receive device is a wearable device, an on-the-go device, a waterproof device, or a dustproof device.
